(19) Europäisches Patentamt
European Patent Office
Office européen des brevets

(11) **EP 4 155 324 A2**

(12) **EUROPEAN PATENT APPLICATION**

(43) Date of publication:
**29.03.2023 Bulletin 2023/13**

(21) Application number: **22181653.1**

(22) Date of filing: **28.06.2022**

(51) International Patent Classification (IPC):
**C08F 4/654** (2006.01)     **C08F 4/656** (2006.01)
**C08F 110/06** (2006.01)     **C08F 210/16** (2006.01)

(52) Cooperative Patent Classification (CPC):
(C-Sets available)
**C08F 110/06; C08F 210/16**     (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2021   JP 2021154769**
         **09.12.2021   JP 2021200073**

(71) Applicant: **SUMITOMO CHEMICAL COMPANY,
LIMITED
Tokyo 103-6020 (JP)**

(72) Inventors:
• **SERYO, Naoki**
  **Ichihara-shi, Chiba, 299-0195 (JP)**
• **SHIMIZU, Taichi**
  **Ichihara-shi, Chiba, 299-0195 (JP)**
• **YAMAMICHI, Hideaki**
  **Ichihara-shi, Chiba, 299-0195 (JP)**
• **CHEN, Kaiyou**
  **Ichihara-shi, Chiba, 299-0195 (JP)**
• **SOGO, Kenji**
  **Chuo-ku, Tokyo, 103-6020 (JP)**

(74) Representative: **Global IP Europe
Patentanwaltskanzlei
Pfarrstraße 14
80538 München (DE)**

(54) **METHOD FOR PRODUCING SOLID CATALYST COMPONENT FOR OLEFIN POLYMERIZATION, METHOD FOR PRODUCING CATALYST FOR OLEFIN POLYMERIZATION, AND METHOD FOR PRODUCING OLEFIN POLYMER**

(57)     Disclosed herein is a method for producing a solid catalyst component for olefin polymerization that is capable of reducing the amount of fine powder contained in the solid catalyst component for olefin polymerization. The method includes the step of reacting a magnesium compound and a titanium halide compound with each other so that a maximum heat release rate per mole of the magnesium compound is 18 W or less. Also disclosed herein is a method for producing a solid catalyst component for olefin polymerization that is capable of preventing a reduction in polymerization activity caused by application of heat to the solid catalyst component for olefin polymerization. The method includes the step of reacting a magnesium compound and a titanium halide compound with each other so that a total heat release value per mole of the titanium compound is 6 kJ to 90 kJ.

EP 4 155 324 A2

(52) Cooperative Patent Classification (CPC): (Cont.)

C-Sets
**C08F 110/06, C08F 4/6465;**
**C08F 110/06, C08F 4/651;**
**C08F 110/06, C08F 4/6541;**
**C08F 210/16, C08F 4/651;**
**C08F 210/16, C08F 4/6565;**
C08F 110/06, C08F 2500/17, C08F 2500/35;
C08F 210/16, C08F 210/14, C08F 2500/18

**Description**

BACKGROUND OF THE INVENTION

Field of the Invention

The present invention relates to a method for producing a solid catalyst component for olefin polymerization, a method for producing a catalyst for olefin polymerization, and a method for producing an olefin polymer.

Description of the Related Art

As a catalyst for use in olefin polymerization, one that contains a solid catalyst component for olefin polymerization containing a titanium atom, a magnesium atom, and a halogen atom is known. As a method for producing such a solid catalyst component for olefin polymerization, for example, WO 2018/025862 discloses one including the step of supplying powder of a magnesium compound to a solution containing a titanium halide compound and a solvent. Such a production method makes it possible to obtain a solid catalyst component for olefin polymerization in the form of powder.

SUMMARY OF THE INVENTION

However, a solid catalyst component for olefin polymerization obtained by such a production method as described above contains a large amount of fine powder. Therefore, when olefin polymerization is performed using a catalyst formed using such a solid catalyst component for olefin polymerization containing fine powder, a polymer containing a large amount of fine powder is obtained. When a gas discharged from a polymer polymerization tank contains a large amount of fine powder contained in such a polymer, there is a fear that a heavy load is placed on facilities (a dust collector, a heat exchanger, etc.) to treat such a gas.

Further, when heat is applied to the solid catalyst component for olefin polymerization due to its storage environment, transport environment, or the like, there is a fear that the amount of a polymer obtained by polymerization per unit amount (polymerization activity) reduces.

Therefore, it is an object of a first aspect of the present invention to provide a method for producing a solid catalyst component for olefin polymerization that is capable of reducing the amount of fine powder contained in the solid catalyst component for olefin polymerization, a method for producing a catalyst for olefin polymerization containing the solid catalyst component for olefin polymerization, and a method for producing an olefin polymer using the catalyst for olefin polymerization.

Further, it is an object of a second aspect of the present invention to provide a method for producing a solid catalyst component for olefin polymerization that is capable of preventing a reduction in polymerization activity caused by application of heat to the solid catalyst component for olefin polymerization, a method for producing a catalyst for olefin polymerization containing the solid catalyst component for olefin polymerization, and a method for producing an olefin polymer using the catalyst for olefin polymerization.

The method for producing a solid catalyst component for olefin polymerization according to the first aspect of the present invention is a method for producing a solid catalyst component for olefin polymerization by reacting a magnesium compound and a titanium halide compound with each other, the method including the step of reacting a magnesium compound and a titanium halide compound with each other so that a maximum heat release rate per mole of the magnesium compound is 18 W or less.

The method for producing a catalyst for olefin polymerization according to the first aspect of the present invention includes a mixing step in which a solid catalyst component for olefin polymerization obtained by the method for producing a solid catalyst component for olefin polymerization and an organic aluminum compound are mixed.

The method for producing an olefin polymer according to the first aspect of the present invention is intended to polymerize an olefin in the presence of the catalyst for olefin polymerization.

The method for producing a solid catalyst component for olefin polymerization according to the second aspect of the present invention is a method for producing a solid catalyst component for olefin polymerization by reacting a magnesium compound and a titanium halide compound with each other, the method including the step of reacting a magnesium compound and a titanium halide compound with each other so that a total heat release value per mole of the titanium compound is 6 kJ to 90 kJ.

The method for producing a catalyst for olefin polymerization according to the second aspect of the present invention includes a mixing step in which a solid catalyst component for olefin polymerization obtained by the method for producing a solid catalyst component for olefin polymerization and an organic aluminum compound are mixed.

The method for producing an olefin polymer according to the second aspect of the present invention is intended to polymerize an olefin in the presence of the catalyst for olefin polymerization.

According to the first aspect of the present invention, it is possible to provide a method for producing a solid catalyst component for olefin polymerization that is capable of reducing the amount of fine powder contained in the solid catalyst component for olefin polymerization. Further, it is possible to provide a method for producing a catalyst for olefin polymerization containing the solid catalyst component for olefin polymerization and a method for producing an olefin polymer using the catalyst for olefin polymerization.

According to the second aspect of the present invention, it is possible to provide a method for producing a solid catalyst component for olefin polymerization that is capable of preventing a reduction in polymerization activity caused by application of heat to the solid catalyst component for olefin polymerization. Further, it is possible to provide a method for producing a catalyst for olefin polymerization containing the solid catalyst component for olefin polymerization and a method for producing an olefin polymer using the catalyst for olefin polymerization.

DETAILED DESCRIPTION OF THE PREFERRED EMBODIMENTS

<First Embodiment>

Hereinbelow, a first embodiment (an embodiment of the first aspect of the present invention) will be described.

<Method for producing solid catalyst component for olefin polymerization>

A method for producing a solid catalyst component for olefin polymerization according to this embodiment is intended to produce a solid catalyst component for olefin polymerization containing a titanium atom, a magnesium atom, and a halogen atom (preferably a solid catalyst component for olefin polymerization further containing an internal electron donor) by reacting a magnesium compound and a titanium halide compound with each other. Further, the method for producing a solid catalyst component for olefin polymerization according to this embodiment includes a step (I) in which a titanium halide compound is supplied to a magnesium compound mixture containing a magnesium compound and a solvent to obtain a slurry containing a solid product. The solid product is a reaction product between the titanium halide compound and the magnesium compound.

The titanium halide compound means a compound that contains a halogen atom and a titanium atom and in which at least one halogen atom is bonded to a titanium atom. Examples of the titanium halide compound include: a titanium tetrahalide such as titanium tetrachloride, titanium tetrabromide, or titanium tetraiodide; a monoalkoxytitanium trihalide such as methoxytitanium trichloride, ethoxytitanium trichloride, n-propoxytitanium trichloride, n-butoxytitanium trichloride, or ethoxytitanium tribromide; a dialkoxytitanium dihalide such as dimethoxytitanium dichloride, diethoxytitanium dichloride, diisopropoxytitanium dichloride, di-n-propoxytitanium dichloride, or diethoxytitanium dibromide; and a trialkoxytitanium monohalide such as trimethoxytitanium chloride, triethoxytitanium chloride, triisopropoxytitanium chloride, tri-n-propoxytitanium chloride, or tri-n-butoxytitanium chloride. Preferred is a titanium tetrahalide or a monoalkoxytitanium trihalide, more preferred is a titanium tetrahalide, and even more preferred is titanium tetrachloride. These titanium halide compounds may be used singly or in combination of two or more of them.

The amount of the titanium halide compound used in the step (I) is preferably 0.01 mol to 100 mol, more preferably 0.03 mol to 50 mol, even more preferably 0.05 mol to 30 mol per mole of magnesium atoms in the magnesium compound used in the step (I).

The magnesium compound is not particularly limited as long as it contains a magnesium atom, and specific examples of such a magnesium compound include compounds represented by the following formulas (i) to (iii):

$$MgR^1{}_k X_{2-k} \ldots \qquad (i)$$

$$Mg(OR^1)_m X_{2-m} \ldots \qquad (ii)$$

$$MgX_2 \cdot nR^1OH \ldots \qquad (iii)$$

(wherein k is a number satisfying $0 \leq k \leq 2$; m is a number satisfying $0 < m \leq 2$; n is a number satisfying $0 \leq n \leq 3$; $R^1$ is a hydrocarbyl group having 1 to 20 carbon atoms; and X is a halogen atom).

Examples of $R^1$ in the formulas (i) to (iii) include an alkyl group, an aralkyl group, an aryl group, and an alkenyl group. Some or all of the hydrogen atoms contained in these groups may be substituted by a halogen atom, a hydrocarbyloxy group, a nitro group, a sulfonyl group, a silyl group, or the like. Examples of the alkyl group represented by $R^1$ include: a linear alkyl group such as a methyl group, an ethyl group, a n-propyl group, a n-butyl group, a n-pentyl group, a n-hexyl group, a n-heptyl group, or a n-octyl group; a branched alkyl group such as an iso-propyl group, an iso-butyl group, a tert-butyl group, an iso-pentyl group, a neopentyl group, or a 2-ethylhexyl group; and a cyclic alkyl group such as a cyclopropyl group, a cyclobutyl group, a cyclopentyl group, a cyclohexyl group, a cycloheptyl group, and a cyclooctyl group. Preferred is a linear alkyl group having 1 to 20 carbon atoms or a branched alkyl group having 3 to 20 carbon atoms. Examples of the aralkyl group represented by $R^1$ include a benzyl group and a phenethyl group. Preferred is an aralkyl group having 7 to 20 carbon atoms. Examples of the aryl group represented by $R^1$ include a phenyl group, a naphthyl group, and a tolyl group. Preferred is an aryl group having 6 to 20 carbon atoms. Examples of the alkenyl group represented by $R^1$ include: a linear alkenyl group such as a vinyl group, an allyl group, a 3-butenyl group, or a 5-hexenyl group; a branched alkenyl group such as an isobutenyl group or a 4-methyl-3-pentenyl group; and a cyclic alkenyl group such as a 2-cyclohexenyl group or a 3-cyclohexenyl group. Preferred is a linear alkenyl group having 2 to 20 carbon atoms or a branched alkenyl group having 3 to 20 carbon atoms. Two or more $R^1$s may be the same or different from each other.

Examples of X in the above formulas (i) to (iii) include a chlorine atom, a bromine atom, an iodine atom, and a fluorine atom. Preferred is a chlorine atom. Two or more Xs may be the same or different from each other.

Specific examples of the magnesium compounds represented by the formulas (i) to (iii) include: a dialkylmagnesium such as dimethylmagnesium, diethylmagnesium, diisopropylmagnesium, dibutylmagnesium, dihexylmagnesium, dioctylmagnesium, ethylbutylmagnesium, dicyclohexylmagnesium, or butyloctylmagnesium; a magnesium dialkoxide such as magnesium dimethoxide, magnesium diethoxide, magnesium dipropoxide, magnesium dibutoxide, magnesium dihexyloxide, magnesium dioctyloxide, or magnesium dicyclohexyloxide; an alkylmagnesium halide such as methylmagnesium chloride, ethylmagnesium chloride, isopropylmagnesium chloride, n-butylmagnesium chloride, t-butylmagnesium chloride, hexylmagnesium chloride, isobutylmagnesium chloride, benzylmagnesium chloride, methylmagnesium bromide, ethylmagnesium bromide, isopropylmagnesium bromide, n-butylmagnesium bromide, t-butylmagnesium bromide, hexylmagnesium bromide, isobutylmagnesium bromide, benzylmagnesium bromide, methylmagnesium iodide, ethylmagnesium iodide, isopropylmagnesium iodide, n-butylmagnesium iodide, t-butylmagnesium iodide, hexylmagnesium iodide, isobutylmagnesium iodide, or benzylmagnesium iodide; an alkoxymagnesium halide such as methoxymagnesium chloride, ethoxymagnesium chloride, isopropoxymagnesium chloride, butoxymagnesium chloride, or hexyloxymagnesium chloride; an aryloxymagnesium halide such as phenyloxymagnesium chloride or the like; and a magnesium halide such as magnesium fluoride, magnesium chloride, magnesium bromide, or magnesium iodide.

Among them, a magnesium halide or a magnesium dialkoxide is preferred. The magnesium halide is preferably magnesium chloride. The magnesium dialkoxide is preferably a magnesium dialkoxide having an alkyl group having 1 to 20 carbon atoms, more preferably a magnesium dialkoxide having an alkyl group having 1 to 10 carbon atoms, particularly preferably magnesium dimethoxide, magnesium diethoxide, magnesium dipropoxide, magnesium di(isopropoxide), or magnesium dibutoxide.

As the magnesium halide, a commercially-available one may directly be used. Alternatively, a precipitate generated by dropping a solution obtained by dissolving a commercially-available magnesium halide in an alcohol into a hydrocarbon liquid may be used by separating it from the liquid. Alternatively, a magnesium halide produced on the basis of a method disclosed in US Patent No. 6,825,146, WO 1998/044009, WO 2003/000754, WO 2003/000757, or WO 2003/085006 may be used.

The magnesium dialkoxide can be produced by, for example, a method in which metallic magnesium and an alcohol are brought into contact with each other in the presence of a catalyst (e.g., JP-A-4-368391, JP-A-3-74341, JP-A-8-73388, and WO 2013/058193). Examples of the alcohol include methanol, ethanol, propanol, butanol, and octanol. Examples of the catalyst include: a halogen such as iodine, chlorine, or bromine; and a magnesium halide such as magnesium iodide or magnesium chloride. Preferred is iodine.

The magnesium compound may be supported by a carrier material. Examples of the carrier material include: a porous inorganic oxide such as $SiO_2$, $Al_2O_3$, MgO, $TiO_2$, and $ZrO_2$; and an organic porous polymer such as polystyrene, a styrenedivinylbenzene copolymer, a styrene-ethylene glycol dimethacrylate copolymer, methyl polyacrylate, ethyl polyacrylate, a methyl acrylate-divinylbenzene copolymer, polyacrylonitrile, an acrylonitrile-divinylbenzene copolymer, polyvinyl chloride, polyethylene, or polypropylene. Among them, a porous inorganic oxide is preferred, and $SiO_2$ is more preferred.

When a porous carrier material is used as the carrier material, from the viewpoint of effectively immobilizing the magnesium compound on the carrier material, the porous carrier material is preferably one whose total volume of pores with a pore radius of 10 to 780 nm as determined by a mercury intrusion technique in accordance with the standard ISO 15901-1:2005 is 0.3 $cm^3$/g or more, more preferably one whose total volume of such pores is 0.4 $cm^3$/g or more. Further, the porous carrier material is preferably one whose total volume of pores with a pore radius of 10 to 780 nm is 25% or more with respect to the total volume of pores with a pore radius of 2 to 100 $\mu$m, more preferably one whose total volume of pores with a pore radius of 10 to 780 nm is 30% or more with respect to the total volume of pores with a pore radius of 2 to 100 $\mu$m.

The examples of the magnesium compound mentioned above may be used singly or in combination of two or more of them. The magnesium compound is preferably in the form of powder in a state where it is not mixed with a solvent.

The content of the magnesium compound in the magnesium compound mixture is preferably 0.001 to 1.0 mg, more preferably 0.05 to 0.5 mg, even more preferably 0.1 to 0.3 mg per milliliter of the solvent contained in the magnesium compound mixture.

The solvent constituting the magnesium compound mixture is preferably inactive against a solid product generated in the step (I) (specifically, a solid catalyst component for olefin polymerization). Examples of the solvent include: an aliphatic hydrocarbon such as pentane, hexane, heptane, octane, or decane; an aromatic hydrocarbon such as benzene, toluene, or xylene; an alicyclic hydrocarbon such as cyclohexane, cyclopentane, methylcyclohexane, or decalin; a halogenated hydrocarbon such as 1,2-dichloroethane or monochlorobenzene; and an ether compound such as diethyl ether, dibutyl ether, diisoamyl ether, or tetrahydrofuran. Among them, an aromatic hydrocarbon or a halogenated hydrocarbon is preferred, and toluene is more preferred. These solvents may be used singly or in combination of two or more of them.

The internal electron donor means an organic compound capable of donating an electron pair to one or two or more metallic atoms contained in the solid catalyst component for olefin polymerization, and specific examples thereof include a monoester compound, a dicarboxylic acid ester compound, a diol diester compound, a β-alkoxy ester compound, and a diether compound.

The monoester compound means an organic compound having one ester bond (-CO-O-) in its molecule, and is preferably, for example, an aromatic carboxylic acid ester compound or an aliphatic carboxylic acid ester compound. Examples of the aromatic carboxylic acid ester compound include methyl benzoate, ethyl benzoate, propyl benzoate, butyl benzoate, pentyl benzoate, hexyl benzoate, octyl benzoate, methyl toluate, ethyl toluate, propyl toluate, butyl toluate, pentyl toluate, hexyl toluate, and octyl toluate. Examples of the aliphatic carboxylic acid ester compound include methyl acetate, ethyl acetate, propyl acetate, butyl acetate, pentyl acetate, hexyl acetate, octyl acetate, methyl propionate, ethyl propionate, propyl propionate, butyl propionate, pentyl propionate, hexyl propionate, octyl propionate, methyl butyrate, ethyl butyrate, propyl butyrate, butyl butyrate, pentyl butyrate, hexyl butyrate, octyl butyrate, methyl valerate, ethyl valerate, propyl valerate, butyl valerate, pentyl valerate, hexyl valerate, octyl valerate, methyl caproate, ethyl caproate, propyl caproate, butyl caproate, pentyl caproate, hexyl caproate, octyl caproate, methyl enanthate, ethyl enanthate, propyl enanthate, butyl enanthate, pentyl enanthate, hexyl enanthate, octyl enanthate, methyl caprylate, ethyl caprylate, propyl caprylate, butyl caprylate, pentyl caprylate, hexyl caprylate, octyl caprylate, methyl pelargonate, ethyl pelargonate, propyl pelargonate, butyl pelargonate, pentyl pelargonate, hexyl pelargonate, octyl pelargonate, methyl caprate, ethyl caprate, propyl caprate, butyl caprate, pentyl caprate, hexyl caprate, octyl caprate, methyl laurate, ethyl laurate, propyl laurate, butyl laurate, pentyl laurate, hexyl laurate, octyl laurate, methyl myristate, ethyl myristate, propyl myristate, butyl myristate, pentyl myristate, hexyl myristate, octyl myristate, methyl palmitate, ethyl palmitate, propyl palmitate, butyl palmitate, pentyl palmitate, hexyl palmitate, octyl palmitate, methyl margarate, ethyl margarate, propyl margarate, butyl margarate, pentyl margarate, hexyl margarate, octyl margarate, methyl stearate, ethyl stearate, propyl stearate, butyl stearate, pentyl stearate, hexyl stearate, and octyl stearate.

The dicarboxylic acid ester compound is a compound having two ester bonds (-CO-O-) in its molecule, means a compound having a structure formed by esterifying two carboxyl groups of a dicarboxylic acid with a monohydric alcohol, and is preferably, for example, an aromatic dicarboxylic acid ester compound or an aliphatic dicarboxylic acid ester compound. The aromatic dicarboxylic acid ester compound is a compound that can be synthesized from, for example, an aromatic dicarboxylic acid or an aromatic dicarboxylic acid dihalide and a monohydric alcohol, and specific examples thereof include dimethyl phthalate, diethyl phthalate, dipropyl phthalate, diisopropyl phthalate, diisobutyl phthalate, di-normal-butyl phthalate, ditertiary-butyl phthalate, dipentyl phthalate, dihexyl phthalate, dioctyl phthalate, dimethyl isophthalate, diethyl isophthalate, dipropyl isophthalate, dibutyl isophthalate, dipentyl isophthalate, dihexyl isophthalate, dioctyl isophthalate, dimethyl terephthalate, diethyl terephthalate, dipropyl terephthalate, dibutyl terephthalate, dipentyl terephthalate, dihexyl terephthalate, and dioctyl terephthalate. The aliphatic dicarboxylic acid ester compound is a compound that can be synthesized from, for example, an aliphatic dicarboxylic acid or an aliphatic dicarboxylic acid dihalide and a monohydric alcohol, and specific examples thereof include dimethyl ethanedioate, diethyl ethanedioate, dipropyl ethanedioate, dibutyl ethanedioate, dipentyl ethanedioate, dihexyl ethanedioate, dioctyl ethanedioate, dimethyl propanedioate, diethyl propanedioate, dipropyl propanedioate, dibutyl propanedioate, dipentyl propanedioate, dihexyl propanedioate, dioctyl propanedioate, dimethyl butanedioate, diethyl butanedioate, dipropyl butanedioate, dibutyl butanedioate, dipentyl butanedioate, dihexyl butanedioate, dioctyl butanedioate, dimethyl pentanedioate, diethyl pentanedioate, dipropyl pentanedioate, dibutyl pentanedioate, dipentyl pentanedioate, dihexyl pentanedioate, dioctyl pentanedioate, dimethyl hexanedioate, diethyl hexanedioate, dipropyl hexanedioate, dibutyl hexanedioate, dipentyl hexanedioate, dihexyl hexanedioate, dioctyl hexanedioate, dimethyl (E)-but-2-enedioate, diethyl (E)-but-2-enedioate, dipropyl (E)-but-2-enedioate, dibutyl (E)-but-2-enedioate, dipentyl (E)-but-2-enedioate, dihexyl (E)-but-2-enedioate, dioctyl (E)-but-2-enedioate, dimethyl (Z)-but-2-enedioate, diethyl (Z)-but-2-enedioate, dipropyl (Z)-but-2-enedioate, dibutyl (Z)-but-2-enedioate, dipentyl (Z)-but-2-enedioate, dihexyl (Z)-but-2-enedioate, dioctyl (Z)-but-2-enedioate, dimethyl cyclohexane-1,2-dicarboxylate, diethyl cyclohexane-1,2-dicarboxylate, dipropyl cyclohexane-1,2-dicarboxylate, dibutyl cyclohexane-1,2-dicarboxylate, dipentyl cyclohexane-1,2-dicarboxylate, dihexyl cyclohexane-1,2-dicarboxylate, dioctyl cyclohexane-1,2-dicarboxylate, dimethyl 1,2-cyclohexene-1,2-dicarboxylate, diethyl 1,2-cyclohexene-1,2-dicarboxylate, dipropyl 1,2-cyclohexene-1,2-dicarboxylate, dibutyl 1,2-cyclohexene-1,2-dicarboxylate, dipentyl 1,2-cyclohexene-1,2-dicarboxylate, dihexyl 1,2-cyclohexene-1,2-dicarboxylate, dioctyl 1,2-cyclohexene-1,2-dicarboxylate, dimethyl 3-methylcyclohexane-1,2-dicarboxylate, diethyl 3-methylcyclohexane-1,2-dicarboxylate, dipropyl 3-methylcyclohexane-1,2-dicarboxylate, dibutyl 3-methylcyclohexane-1,2-dicarboxylate, dipentyl 3-methylcyclohexane-1,2-dicarboxylate, dihexyl 3-methylcyclohexane-1,2-dicarboxylate, dioctyl 3-methylcyclohexane-1,2-dicarboxylate, dimethyl 3,6-dimethylcyclohexane-1,2-dicarboxylate, diethyl 3,6-dimethylcyclohexane-1,2-dicarboxylate, dipropyl 3,6-dimethylcyclohexane-1,2-dicarboxylate, dibutyl 3,6-dimethylcyclohexane-1,2-dicarboxylate, dipentyl 3,6-dimethylcyclohexane-1,2-dicarboxylate, dihexyl 3,6-dimethylcyclohexane-1,2-dicarboxylate, and dioctyl 3,6-dimethylcyclohexane-1,2-dicarboxylate.

The diol diester compound is a compound having two ester bonds (-CO-O-) in its molecule and means a compound having a structure formed by esterifying a carboxyl group of a monocarboxylic acid or a dicarboxylic acid with each of two hydroxy groups of a diol, and examples thereof include propane 1,2-dibenzoate, 1,2-diacetyloxypropane, butane 1,2-dibenzoate, 1,2-diacetyloxybutane, cyclohexane 1,2-dibenzoate, 1,2-diacetyloxycyclohexane, propane 1,3-dibenzoate, 1,3-diacetyloxypropane, pentane 2,4-dibenzoate, 2,4-diacetyloxypentane, cyclopentane 1,2-dibenzoate, 1,2-diacetyloxycyclopentane, 1,2-dibenzoate-4-tert-butyl-6-methylbenzene, 1,2-diacetyloxy-4-tert-butyl-6-methylbenzene, 1,3-dibenzoate-4-tert-butyl-6-methylbenzene, and 1,3-diacetyloxy-4-tert-butyl-6-methylbenzene.

The β-alkoxy ester compound means a compound having an alkoxycarbonyl group and having an alkoxy group at the β-position of the alkoxycarbonyl group, and examples thereof include methyl 2-methoxymethyl-3,3-dimethylbutanoate, ethyl 2-methoxymethyl-3,3-dimethylbutanoate, propyl 2-methoxymethyl-3,3-dimethylbutanoate, butyl 2-methoxymethyl-3,3-dimethylbutanoate, pentyl 2-methoxymethyl-3,3-dimethylbutanoate, hexyl 2-methoxymethyl-3,3-dimethylbutanoate, octyl 2-methoxymethyl-3,3-dimethylbutanoate, methyl 3-methoxy-2-phenylpropionate, ethyl 3-methoxy-2-phenylpropionate, propyl 3-methoxy-2-phenylpropionate, butyl 3-methoxy-2-phenylpropionate, pentyl 3-methoxy-2-phenylpropionate, hexyl 3-methoxy-2-phenylpropionate, octyl 3-methoxy-2-phenylpropionate, methyl 2-ethoxymethyl-3,3-dimethylbutanoate, ethyl 2-ethoxymethyl-3,3-dimethylbutanoate, propyl 2-ethoxymethyl-3,3-dimethylbutanoate, butyl 2-ethoxymethyl-3,3-dimethylbutanoate, pentyl 2-ethoxymethyl-3,3-dimethylbutanoate, hexyl 2-ethoxymethyl-3,3-dimethylbutanoate, octyl 2-ethoxymethyl-3,3-dimethylbutanoate, methyl 3-ethoxy-2-phenylpropionate, ethyl 3-ethoxy-2-phenylpropionate, propyl 3-ethoxy-2-phenylpropionate, butyl 3-ethoxy-2-phenylpropionate, pentyl 3-ethoxy-2-phenylpropionate, hexyl 3-ethoxy-2-phenylpropionate, octyl 3-ethoxy-2-phenylpropionate, methyl 2-propyloxymethyl-3,3-dimethylbutanoate, ethyl 2-propyloxymethyl-3,3-dimethylbutanoate, propyl 2-propyloxymethyl-3,3-dimethylbutanoate, butyl 2-propyloxymethyl-3,3-dimethylbutanoate, pentyl 2-propyloxymethyl-3,3-dimethylbutanoate, hexyl 2-propyloxymethyl-3,3-dimethylbutanoate, octyl 2-propyloxymethyl-3,3-dimethylbutanoate, methyl 3-propyloxy-2-phenylpropionate, ethyl 3-propyloxy-2-phenylpropionate, propyl 3-propyloxy-2-phenylpropionate, butyl 3-propyloxy-2-phenylpropionate, pentyl 3-propyloxy-2-phenylpropionate, hexyl 3-propyloxy-2-phenylpropionate, octyl 3-propyloxy-2-phenylpropionate, methyl 2-methoxybenzenecarboxylate, ethyl 2-methoxybenzenecarboxylate, propyl 2-methoxybenzenecarboxylate, butyl 2-methoxybenzenecarboxylate, pentyl 2-methoxybenzenecarboxylate, hexyl 2-methoxybenzenecarboxylate, octyl 2-methoxybenzenecarboxylate, methyl 2-ethoxybenzenecarboxylate, ethyl 2-ethoxybenzenecarboxylate, propyl 2-ethoxybenzenecarboxylate, butyl 2-ethoxybenzenecarboxylate, pentyl 2-ethoxybenzenecarboxylate, hexyl 2-ethoxybenzenecarboxylate, and octyl 2-ethoxybenzenecarboxylate.

The diether compound means a compound having two ether bonds in its molecule, and examples thereof include 1,2-dimethoxypropane, 1,2-diethoxypropane, 1,2-dipropyloxypropane, 1,2-dibutoxypropane, 1,2-di-tert-butoxypropane, 1,2-diphenoxypropane, 1,2-dibenzyloxypropane, 1,2-dimethoxybutane, 1,2-diethoxybutane, 1,2-dipropyloxybutane, 1,2-dibutoxybutane, 1,2-di-tert-butoxybutane, 1,2-diphenoxybutane, 1,2-dibenzyloxybutane, 1,2-dimethoxycyclohexane, 1,2-diethoxycyclohexane, 1,2-dipropyloxycyclohexane, 1,2-dibutoxycyclohexane, 1,2-di-tert-butoxycyclohexane, 1,2-diphenoxycyclohexane, 1,2-dibenzyloxycyclohexane, 1,3-dimethoxypropane, 1,3-diethoxypropane, 1,3-dipropyloxypropane, 1,3-dibutoxypropane, 1,3-di-tert-butoxypropane, 1,3-diphenoxypropane, 1,3-dibenzyloxypropane, 2,4-dimethoxypentane, 2,4-diethoxypentane, 2,4-dipropyloxypentane, 2,4-dibutoxypentane, 2,4-di-tert-butoxypentane, 2,4-diphenoxypentane, 2,4-dibenzyloxypentane, 1,2-dimethoxycyclopentane, 1,2-diethoxycyclopentane, 1,2-dipropyloxycyclopentane, 1,2-dibutoxycyclopentane, 1,2-di-tert-butoxycyclopentane, 1,2-diphenoxycyclopentane, 1,2-dibenzyloxycyclopentane, 9,9-bis(methoxymethyl)fluorene, 9,9-bis(ethoxymethyl)fluorene, 9,9-bis(propyloxymethyl)fluorene, 9,9-bis(butoxymethyl)fluorene, 9,9-bis-tert-butoxymethylfluorene, 9,9-bis(phenoxymethyl)fluorene, 9,9-bis(benzyloxymethyl)fluorene, 1,2-dimethoxybenzene, 1,2-diethoxybenzene, 1,2-dipropyloxybenzene, 1,2-dibutoxybenzene, 1,2-di-tert-butoxybenzene, 1,2-diphenoxybenzene, and 1,2-dibenzyloxybenzene.

Other examples of the internal electron donor include those described in JP-A-2011-246699.

Among them, preferred examples of the internal electron donor include a dicarboxylic acid ester compound, a diol diester compound, and a β-alkoxyester compound. These internal electron donors may be used singly or in combination of two or more of them.

The amount of the internal electron donor used is preferably 0.001 to 5 mol, more preferably 0.01 to 0.5 mol per mole of magnesium atoms in the magnesium compound used in the step (I).

The method for producing a solid catalyst component for olefin polymerization according to this embodiment includes the step of reacting a magnesium compound and a titanium halide compound with each other so that a maximum heat release rate per mole of the magnesium compound is 18 W or less, preferably 10 W or less. The maximum heat release rate is based on reaction heat between the magnesium compound and the titanium halide compound at the time when the step (I) is performed. The maximum heat release rate can be determined by a method described later in [Examples]. It is to be noted that the maximum heat release rate can be adjusted by adjusting at least one of the temperature in a reaction tank to perform the step (I), the concentrations of the materials, and the supply rate of the titanium halide compound described later.

The step (I) includes the step of maintaining the supply rate of the titanium halide compound per mole of the magnesium compound at 0.01 mol/min or less, preferably 0.005 mol/min or less, more preferably 0.003 mol/min or less until at least 1 mole of the titanium halide compound is supplied per mole of the magnesium compound (hereinafter also referred to as a "first supply step"). It is to be noted that the step (I) includes at least one of the above-described step in which the maximum heat release rate is satisfied and the above-described step in which the supply rate of the titanium halide compound is satisfied. This makes it possible to reduce the amount of fine powder contained in a resulting solid catalyst component for olefin polymerization. In the first supply step, the supply rate of the titanium halide compound per mole of the magnesium compound may be 0.0005 mol/min or more or may be 0.001 mol/min or more. It is to be noted that by performing the first supply step, the reaction between the magnesium compound and the titanium halide compound can be performed so that the maximum heat release rate falls within the above range.

Further, the step (I) may include the step of, after at least 1 mole of the titanium halide compound is supplied per mole of the magnesium compound (i.e., after the first supply step), increasing the supply rate of the titanium halide compound per mole of the magnesium compound to a level preferably exceeding 0.01 mol/min, more preferably 0.025 mol/min or more, even more preferably 0.04 mol/min or more (hereinafter also referred to as a "second supply step"). This makes it possible to quickly supply the titanium halide compound because the supply rate of the titanium halide compound increases after at least 1 mole of the titanium halide compound is supplied per mole of the magnesium compound. It is to be noted that, in the second supply step, the supply rate of the titanium halide compound per mole of the magnesium compound may be 10 mol/min or less or may be 1 mol/min or less.

The step (I) is preferably performed in an inert gas atmosphere such as nitrogen gas or argon gas.

The supply of the titanium halide compound to the magnesium compound mixture may be performed continuously or intermittently (e.g., dropwise). It is to be noted that the titanium halide compound may be supplied to the magnesium compound mixture in a state where it is mixed with a solvent (e.g., a solvent that may constitute the magnesium compound mixture) or may be supplied to the magnesium compound mixture without being mixed with a solvent.

Examples of a method for bringing the components into contact with each other in the step (I) include known methods such as a slurry method and a mechanical pulverization method (e.g., a method in which components are brought into contact with each other while being pulverized by a ball mill).

The temperature of the step (I) is preferably -20°C to 50°C, more preferably -10°C to 20°C, even more preferably -5°C to 10°C. The total time of the step (I) (the total mixing time of the magnesium compound mixture and the titanium halide compound) is preferably 0.01 to 48 hours, more preferably 0.1 to 36 hours, even more preferably 0.5 to 24 hours.

It is to be noted that the solvent contained in the slurry obtained in the step (I) contains the solvent of the magnesium compound mixture. When the titanium halide compound is mixed with a solvent to be used in the form of a solution, the solvent contained in the slurry obtained in the step (I) may contain the solvent of the solution. The solvent contained in the slurry obtained in the step (I) may contain a solvent added alone during the step (I) (e.g., a solvent that may constitute the magnesium compound mixture).

When the solid catalyst component for olefin polymerization containing an internal electron donor is produced, the timing of supply of the internal electron donor is not particularly limited. For example, the internal electron donor may previously be supplied to a reactor to perform the step (I) before the step (I). Alternatively, the internal electron donor may previously be supplied to the magnesium compound mixture. Further alternatively, the titanium halide compound and the internal electron donor may previously be mixed. Further alternatively, the internal electron donor may be supplied to the reactor during the step (I) or may be supplied to the slurry containing the solid product after the step (I). Further alternatively, two or more of them may be combined.

From the viewpoint of improving the particle properties of a resulting solid catalyst component for olefin polymerization, the internal electron donor is preferably supplied to the slurry containing the solid product after the step (I). In such a case, the method for producing a solid catalyst component for olefin polymerization according to this embodiment includes a step (II) in which an internal electron donor is supplied to the slurry containing a solid product obtained in the step (I).

Irrespective of the timing of supply of the internal electron donor, the temperature of the reaction between the solid product generated in the step (I) and the internal electron donor is preferably -20°C to 150°C, more preferably -5°C to 135°C, even more preferably 30°C to 120°C. The reaction time is preferably 0.1 to 12 hours, more preferably 0.5 to 10 hours. The reaction between the solid product and the internal electron donor is preferably performed in an inert gas atmosphere such as nitrogen gas or argon gas.

Each of the step (I) and the step (II) is preferably performed with stirring. The stirring is performed so that the circumferential velocity v of a stirring blade represented by the following formula (1) is preferably in the range of 0.1 to 10 m/s, more preferably in the range of 0.5 to 5.0 m/s, even more preferably in the range of 1.0 to 3.0 m/s:

$$v = n \times d \ \dots (1)$$

(wherein n is a rotation speed (rad/s) of the stirring blade and d is a blade diameter (m) of the stirring blade).

The solid product obtained in the step (I) (preferably a solid obtained by performing the step (I) and the step (II)) can be used as a solid catalyst component for olefin polymerization. Alternatively, a solid obtained by further bringing the solid product obtained in the step (I) (preferably a solid obtained by performing the step (I) and the step (II)) as a precursor into contact with at least one of the titanium halide compound, the magnesium compound, and the internal electron donor may be used as a solid catalyst component for olefin polymerization.

The solid catalyst component for olefin polymerization or the precursor is preferably washed with a solvent for washing to remove unwanted matter. The solvent for washing is preferably inactive against the solid catalyst component for olefin polymerization or the precursor, and examples thereof include: an aliphatic hydrocarbon such as pentane, hexane, heptane, or octane; an aromatic hydrocarbon such as benzene, toluene, or xylene; an alicyclic hydrocarbon such as cyclohexane or cyclopentane; and a halogenated hydrocarbon such as 1,2-dichloroethane or monochlorobenzene. Among them, an aromatic hydrocarbon or a halogenated hydrocarbon is particularly preferred. The amount of the solvent used for washing per one stage of contact is, for example, 0.1 mL to 1000 mL, preferably 1 mL to 100 mL per gram of the solid catalyst component for olefin polymerization or the precursor. The washing is performed, for example, once to five times per one stage of contact. The temperature of the washing is, for example, -50 to 150°C, preferably 0 to 140°C, more preferably 60 to 135°C. The time of the washing is preferably 1 to 120 minutes, more preferably 2 to 60 minutes.

When the precursor is brought into contact with at least one of the titanium halide compound, the magnesium compound, and the internal electron donor to obtain a solid catalyst component for olefin polymerization, the method for producing a solid catalyst component for olefin polymerization according to this embodiment includes a step (III) in which the precursor is brought into contact with at least one of the titanium halide compound, the magnesium compound, and the internal electron donor.

The step (III) is preferably performed in a solvent. The solvent used in the step (III) is the same as described above with reference to the step (I). When the precursor is brought into contact with the titanium halide compound in the step (III), the amount of the titanium halide compound is, for example, 0.1 to 10 mL/mL, preferably 0.1 to 1.0 mL/mL per milliliter of the solvent used in the step (III). When the precursor is brought into contact with the magnesium compound in the step (III), the amount of the magnesium compound is, for example, 0.01 to 10 g/mL, preferably 0.1 to 1.0 g/mL per milliliter of the solvent used in the step (III). When the precursor is brought into contact with the internal electron donor in the step (III), the amount of the internal electron donor is, for example, 0.001 to 5 mL/mL, preferably 0.005 to 0.5 mL/mL, more preferably 0.01 to 0.1 mL/mL per milliliter of the solvent used in the step (III).

The kind of each of the titanium halide compound, the magnesium compound, and the internal electron donor used in the step (III) may be the same as or different from that used in the step (I) or (II).

The temperature of the step (III) is, for example, in the range of -20°C to 150°C, preferably -5°C to 130°C, more preferably 40°C to 120°C. The time of the step (III) is, for example, 0.1 to 12 hours, preferably 1 to 8 hours. The contact of the precursor with at least one of the titanium halide compound, the magnesium compound, and the internal electron donor is performed in, for example, an inert gas atmosphere such as nitrogen gas or argon gas. The step (III) may be performed once or repeatedly performed.

After the completion of the reaction in the step (III), the obtained solid can be used as a solid catalyst component for olefin polymerization. The solid catalyst component for olefin polymerization is preferably washed with a solvent for washing in the same manner as described above. Further, the solid catalyst component for olefin polymerization may be dried (e.g., vacuum-dried) after washing.

When an olefin is polymerized using a catalyst for olefin polymerization formed using a solid catalyst component for olefin polymerization produced in such a manner as described above, an olefin polymer obtained by olefin polymerization can have relatively high stereoregularity. Further, when a particulate olefin polymer is produced by, for example, slurry polymerization, solution polymerization, bulk polymerization, or vapor-phase polymerization using such a catalyst for olefin polymerization, polymer particles having a relatively small amount of fine powder can be obtained.

<Solid catalyst component for olefin polymerization>

A solid catalyst component for olefin polymerization produced by the above-described production method is present as solid matter in at least toluene and can be combined with a promoter for olefin polymerization, such as an organic aluminum compound, to form a catalyst for olefin polymerization.

The solid catalyst component for olefin polymerization contains a titanium atom, a magnesium atom, and a halogen atom and preferably contains at least one internal electron donor selected from the group consisting of a monoester compound, an aliphatic dicarboxylic acid ester compound, a diol diester compound, a β-alkoxy ester compound, and a diether compound.

Further, the solid catalyst component for olefin polymerization preferably satisfies the following requirements (I) to (IV).

(I) The total pore volume as measured by a mercury intrusion technique in accordance with the standard ISO 15901-1:2005 is 0.95 to 1.80 mL/g, and the specific surface area as measured by a mercury intrusion technique in accordance with the standard ISO 15901-1:2005 is 60 to 170 $m^2$/g.
(II) The cumulative percentage of components having a particle diameter of 10 μm or less in a volume-based particle diameter distribution as measured by a laser diffraction/scattering method in accordance with the standard ISO13320:2009 is 6.5% or less.
(III) Among peak components obtained by waveform separation of peaks belonging to the 1s orbital of an oxygen atom obtained by X-ray photoelectron spectroscopy in accordance with the standard ISO 15472:2001, the ratio of the area (G) of peak components whose peak top is in the range of 529 eV or more and less than 532 eV of binding energy to the area (F) of peak components whose peak top is in the range of 532 eV or more and 534 eV or less of binding energy (G/F) is 0.33 or less.
(IV) The titanium content is 1.50 to 3.40 wt%.

Some or all of titanium atoms in the solid catalyst component for olefin polymerization are derived from the above-described titanium halide compound. Some or all of halogen atoms in the solid catalyst component for olefin polymerization are derived from the above-described titanium halide compound.

Some or all of magnesium atoms in the solid catalyst component for olefin polymerization are derived from the above-described magnesium compound. Further, some of halogen atoms in the solid catalyst component for olefin polymerization may be derived from the above-described magnesium compound.

The monoester compound, the aliphatic dicarboxylic acid ester compound, the diol diester compound, the β-alkoxy ester compound, and the diether compound as the internal electron donor are the same as those described above. For example, the internal electron donor is preferably a diol diester compound or a β-alkoxy ester compound, more preferably a β-alkoxy ester compound, even more preferably ethyl 2-ethoxymethyl-3,3-dimethylbutanoate.

The requirement (I) will be described below.

The total pore volume is preferably 0.95 to 1.80 mL/g, more preferably 1.00 to 1.70 mL/g, even more preferably 1.10 to 1.60 mL/g. When the total pore volume is 0.95 mL/g or more, polymer productivity improves. When the total pore volume is 1.80 mL/g or less, sufficient catalyst particle strength can be achieved.

The specific surface area is preferably 60 to 170 $m^2$/g, more preferably 80 to 150 $m^2$/g, even more preferably 88 to 130 $m^2$/g. When the specific surface area is 60 $m^2$/g or more, the amount of a sticky component contained in a resulting polymer can be reduced. When the specific surface area is 170 $m^2$/g or less, sufficient catalyst particle strength can be achieved.

The requirement (II) will be described below.

The cumulative percentage is preferably 6.5% or less, more preferably 6.2% or less, even more preferably 6.0% or less, particularly preferably 5.5% or less. When the cumulative percentage is 6.5% or less, fouling trouble in a polymerization process can be prevented.

The requirement (III) will be described below.

The ratio (G/F) is preferably 0.33 or less, more preferably 0.30 or less, even more preferably 0.28 or less. When the ratio (G/F) is 0.33 or less, generation of a sticky component can be prevented in polymerization.

The requirement (IV) will be described below.

The titanium content is preferably 1.50 to 3.40 wt%, more preferably 1.6 to 3.0 wt%. When the titanium content is 3.40 wt% or less, the amount of a sticky component contained in a resulting polymer can be reduced, and when the titanium content is 1.5 wt% or more, polymer productivity can be improved.

The titanium atom content in the solid catalyst component for olefin polymerization is preferably 1.5 to 3.4 mass%, more preferably 1.8 to 3.0 mass%. The titanium atom content can be determined by, for example, a method described later in Examples.

The internal electron donor content in the solid catalyst component for olefin polymerization is preferably 5 to 20 mass%, more preferably 10 to 15 mass%. The internal electron donor content can be determined by, for example, a method described later in Examples.

The alkoxy group content in the solid catalyst component for olefin polymerization is preferably 2.0 mass% or less, more preferably 1.5 mass% or less. The alkoxy group content can be determined by, for example, a method described later in Examples.

<Catalyst for olefin polymerization>

A catalyst for olefin polymerization can be produced by bringing the above-described solid catalyst component for olefin polymerization into contact with an organic aluminum compound (preferably with an organic aluminum compound and an external electron donor). That is, a method for producing a catalyst for olefin polymerization includes a mixing step in which the above-described solid catalyst component for olefin polymerization and an organic aluminum compound (preferably an organic aluminum compound and an external electron donor) are mixed. Therefore, a catalyst for olefin polymerization produced by such a method contains the above-described solid catalyst component for olefin polymerization and an organic aluminum compound, and preferably further contains an external electron donor.

A method for bringing the solid catalyst component for olefin polymerization into contact with an organic aluminum compound (preferably a method for bringing three components including these two components and an external electron donor into contact with each other) is not particularly limited as long as a catalyst for olefin polymerization is generated. The contact can be performed in the presence of a solvent or in the absence of a solvent. It is to be noted that a catalyst for olefin polymerization formed by bringing the above-described three components into contact with each other may be supplied to a polymerization tank for performing olefin polymerization. Alternatively, a catalyst for olefin polymerization may be formed by separately supplying the components to a polymerization tank and bringing them into contact with each other in the polymerization tank. Further alternatively, a catalyst for olefin polymerization may be formed by separately supplying a mixture obtained by bringing any two of the three components into contact with each other and the remaining component to a polymerization tank and bringing them into contact with each other in the polymerization tank.

The organic aluminum compound is a compound having at least one carbon-aluminum bond, and specific examples thereof include compounds mentioned in JP-A-10-212319. Among them, preferred is a trialkylaluminum, a mixture of a trialkylaluminum and a dialkylaluminum halide, or an alkylalumoxane, and more preferred is triethylaluminum, triisobutylaluminum, a mixture of triethylaluminum and diethylaluminum chloride, or tetraethyldialumoxane.

These organic aluminum compounds may be used singly or in combination of two or more of them.

The amount of the organic aluminum compound used is preferably 0.01 to 1000 $\mu$mol, more preferably 0.1 to 500 $\mu$mol per milligram of the solid catalyst component for olefin polymerization.

Examples of the external electron donor include compounds mentioned in Japanese Patent No. 2950168, JP-A-2006-96936, JP-A-2009-173870, and JP-A-2010-168545. Among them, an oxygen-containing compound or a nitrogen-containing compound is preferred. Examples of the oxygen-containing compound include an alkoxysilane, an ether, an ester, and a ketone. Among them, an alkoxysilane or an ether is preferred.

The alkoxysilane as the external electron donor is preferably a compound represented by any one of the following formulas (iv) to (vi):

$$R^2{}_h Si(OR^3)_{4-h} \ldots \qquad (iv)$$

$$Si(OR^4)_3(NR^5R^6) \ldots \qquad (v)$$

$$Si(OR^4)_3(NR^7) \ldots \qquad (vi)$$

[wherein $R^2$ is a hydrocarbyl group having 1 to 20 carbon atoms or a hydrogen atom; $R^3$ is a hydrocarbyl group having 1 to 20 carbon atoms; h is an integer satisfying $0 \leq h < 4$; when there are more than one $R^2$ and/or more than one $R^3$, $R^2$s may be the same or different from each other and $R^3$s may be the same or different from each other; $R^4$ is a hydrocarbyl group having 1 to 6 carbon atoms; $R^5$ and $R^6$ are each a hydrogen atom or a hydrocarbyl group having 1 to 12 carbon atoms; and $NR^7$ is a cyclic amino group having 5 to 20 carbon atoms.

Examples of the hydrocarbyl group represented by $R^2$ and $R^3$ in the above formula (iv) include an alkyl group, an aralkyl group, an aryl group, and an alkenyl group, examples of the alkyl group represented by $R^2$ and $R^3$ include: a linear alkyl group such as a methyl group, an ethyl group, a n-propyl group, a n-butyl group, a n-pentyl group, a n-hexyl group, a n-heptyl group, or a n-octyl group; a branched alkyl group such as an iso-propyl group, an iso-butyl group, a tert-butyl group, an iso-pentyl group, a neopentyl group, or a 2-ethylhexyl group; and a cyclic alkyl group such as a cyclopropyl group, a cyclobutyl group, a cyclopentyl group, a cyclohexyl group, a cycloheptyl group, or a cyclooctyl group. Preferred is a linear, branched, or cyclic alkyl group having 1 to 20 carbon atoms. Examples of the aralkyl group represented by $R^2$ and $R^3$ include a benzyl group and a phenethyl group. Preferred is an aralkyl group having 7 to 20 carbon atoms. Examples of the aryl group represented by $R^2$ and $R^3$ include a phenyl group, a tolyl group, and a xylyl group. Preferred is an aryl group having 6 to 20 carbon atoms. Examples of the alkenyl group represented by $R^2$ and $R^3$ include: a linear alkenyl group such as a vinyl group, an allyl group, a 3-butenyl group, or a 5-hexenyl group; a branched alkenyl group such as an iso-butenyl group or a 5-methyl-3-pentenyl group; and a cyclic alkenyl group such as a 2-cyclohexenyl group and a 3-cyclohexenyl group. Preferred is an alkenyl group having 2 to 10 carbon atoms.

Specific examples of the alkoxysilane represented by the above formula (iv) include cyclohexylmethyldimethoxysilane, cyclohexylethyldimethoxysilane, diisopropyldimethoxysilane, tert-butylethyldimethoxysilane, tert-butyl-n-propyldimethoxysilane, phenyltrimethoxysilane, diphenyldimethoxysilane, dicyclobutyldimethoxysilane, dicyclopentyldimethoxysilane, tetraethoxysilane, methyltriethoxysilane, ethyltriethoxysilane, isobutyltriethoxysilane, vinyltriethoxysilane, secbutyltriethoxysilane, cyclohexyltriethoxysilane, and cyclopentyltriethoxysilane.

Examples of the hydrocarbyl group represented by $R^4$ in the above formulas (v) and (vi) include an alkyl group and an alkenyl group, and examples of the alkyl group represented by $R^4$ include: a linear alkyl group such as a methyl group, an ethyl group, a n-propyl group, a n-butyl group, a n-pentyl group, or a n-hexyl group; a branched alkyl group such as an iso-propyl group, an iso-butyl group, a tert-butyl group, an iso-pentyl group, or a neopentyl group; and a cyclic alkyl group such as a cyclopropyl group, a cyclobutyl group, a cyclopentyl group, or a cyclohexyl group. Preferred is a linear alkyl group having 1 to 6 carbon atoms. Examples of the alkenyl group represented by $R^4$ include: a linear alkenyl group such as a vinyl group, an allyl group, a 3-butenyl group, or a 5-hexenyl group; a branched alkenyl group such as an isobutenyl group or a 5-methyl-3-pentenyl group; and a cyclic alkenyl group such as a 2-cyclohexenyl group or a 3-cyclohexenyl group. Preferred is a linear alkenyl group having 2 to 6 carbon atoms, and particularly preferred is a methyl group or an ethyl group.

Examples of the hydrocarbyl group represented by $R^5$ and $R^6$ in the above formula (v) include an alkyl group and an alkenyl group, and examples of the alkyl group represented by $R^5$ and $R^6$ include: a linear alkyl group such as a methyl group, an ethyl group, a n-propyl group, a n-butyl group, a n-pentyl group, or a n-hexyl group; a branched alkyl group such as an iso-propyl group, an iso-butyl group, a tert-butyl group, an iso-pentyl group, or a neopentyl group; and a cyclic alkyl group such as a cyclopropyl group, a cyclobutyl group, a cyclopentyl group, or a cyclohexyl group. Preferred is a linear alkyl group having 1 to 6 carbon atoms. Examples of the alkenyl group represented by $R^5$ and $R^6$ include: a linear alkenyl group such as a vinyl group, an allyl group, a 3-butenyl group, or a 5-hexenyl group; a branched alkenyl group such as an isobutenyl group or a 5-methyl-3-pentenyl group; and a cyclic alkenyl group such as a 2-cyclohexenyl group or a 3-cyclohexenyl group. Preferred is a linear alkenyl group having 2 to 6 carbon atoms, and particularly preferred is a methyl group or an ethyl group.

Specific examples of the alkoxysilane represented by the above formula (v) include dimethylaminotrimethoxysilane, diethylaminotrimethoxysilane, di-n-propylaminotrimethoxysilane, dimethylaminotriethoxysilane, diethylaminotriethoxysilane, di-n-propylaminotriethoxysilane, methylethylaminotriethoxysilane, methyl-n-propylaminotriethoxysilane, tert-butylaminotriethoxysilane, diisopropylaminotriethoxysilane, and methylisopropylaminotriethoxysilane.

Examples of the cyclic amino group represented by $NR^7$ in the above formula (vi) include a perhydroquinolino group, a perhydroisoquinolino group, a 1,2,3,4-tetrahydroquinolino group, a 1,2,3,4-tetrahydroisoquinolino group, and an octamethyleneimino group.

Specific examples of the alkoxysilane represented by the above formula (vi) include perhydroquinolinotriethoxysilane, perhydroisoquinolinotriethoxysilane, 1,2,3,4-tetrahydroquinolinotriethoxysilane, 1,2,3,4-tetrahydroisoquinolinotriethoxysilane, and octamethyleneiminotriethoxysilane.

The ether as the external electron donor is preferably a cyclic ether compound. The cyclic ether compound is a heterocyclic compound having at least one -C-O-C- bond in its cyclic structure and is preferably a cyclic ether compound having at least one -C-O-C-O-C- bond in its cyclic structure, more preferably 1,3-dioxolane or 1,3-dioxane.

These external electron donors may be used singly or in combination of two or more of them.

The amount of the external electron donor used is preferably 0.0001 to 1000 $\mu$mol, more preferably 0.001 to 500 $\mu$mol, even more preferably 0.01 to 150 $\mu$mol per milligram of the solid catalyst component for olefin polymerization.

When the catalyst for olefin polymerization is used for olefin polymerization, it is possible to obtain a polymer having relatively high stereoregularity.

<Olefin polymer>

An olefin polymer can be obtained by polymerizing an olefin in the presence of the above-described catalyst for olefin polymerization.

Examples of the olefin include ethylene and an $\alpha$-olefin having 3 or more carbon atoms. Examples of the $\alpha$-olefin include: a linear monoolefin such as propylene, 1-butene, 1-pentene, 1-hexene, 1-heptene, 1-octene, or 1-decene; a branched monoolefin such as 3-methyl-1-butene, 3-methyl-1-pentene, or 4-methyl-1-pentene; a cyclic monoolefin such as vinylcyclohexane; and a combination of two or more of them. Among them, ethylene or propylene is preferably used alone or a combination of olefins mainly containing ethylene or propylene is preferably used. The combination of olefins may include a combination of two or more kinds of olefins or a combination of a compound having multiple unsaturated bonds, such as a conjugated diene or a nonconjugated diene, and olefins.

The olefin polymer is preferably an ethylene homopolymer, a propylene homopolymer, a 1-butene homopolymer, a 1-pentene homopolymer, a 1-hexene homopolymer, an ethylene-propylene copolymer, an ethylene-1-butene copolymer, an ethylene-1-hexene copolymer, a propylene-1-butene copolymer, a propylene-1-hexene copolymer, an ethylene-propylene-1-butene copolymer, an ethylene-propylene-1-hexene copolymer, or a polymer obtained by multistage polymerization thereof.

It is to be noted that when the catalyst for olefin polymerization is formed in production of the olefin polymer, the following steps are preferably performed:

a step (i) in which a small amount of an olefin is polymerized in the presence of the solid catalyst component for olefin polymerization and the organic aluminum compound to generate a catalyst component whose surface is covered with a polymer of the olefin (hereinafter also referred to as a pre-polymerized catalyst component); and
a step (ii) in which the pre-polymerized catalyst component, the organic aluminum compound, and the external electron donor are brought into contact with each other.
It is to be noted that the olefin used in the step (i) may be the same as or different from an olefin to be polymerized in olefin polymerization using the catalyst for olefin polymerization (hereinafter also referred to as "main polymerization"). Further, a chain-transfer agent such as hydrogen may be used to adjust the molecular weight of the olefin polymer generated in the step (i) or the external electron donor may be used.

The polymerization of the step (i) (hereinafter also referred to as "pre-polymerization") may preferably be slurry polymerization using, as a solvent, an inert hydrocarbon such as propane, butane, isobutane, pentane, isopentane, hexane, heptane, octane, cyclohexane, benzene, or toluene.

The amount of the organic aluminum compound used in the step (i) is preferably 0.5 mol to 700 mol, more preferably 0.8 mol to 500 mol, particularly preferably 1 mol to 200 mol per mole of titanium atoms in the solid catalyst component for olefin polymerization used in the step (i).

The amount of the olefin to be pre-polymerized is preferably 0.01 g to 1000 g, more preferably 0.05 g to 500 g, particularly preferably 0.1 g to 200 g per gram of the solid catalyst component for olefin polymerization used in the step (i) .

The concentration of slurry of the solid catalyst component for olefin polymerization in the slurry polymerization of the step (i) is preferably 1 to 500 g-solid catalyst component for olefin polymerization/liter-solvent, more preferably 3 to 300 g-solid catalyst component for olefin polymerization/liter-solvent.

The temperature of the pre-polymerization is preferably - 20°C to 100°C, more preferably 0°C to 80°C. The partial pressure of the olefin in a gas phase in the pre-polymerization is preferably 0.01 MPa to 2 MPa, more preferably 0.1 MPa to 1 MPa, provided, however, that this does not apply to an olefin that is in a liquid state at the pressure and temperature of the pre-polymerization. The time of the pre-polymerization is preferably 2 minutes to 15 hours.

Examples of a method for supplying the solid catalyst component for olefin polymerization, the organic aluminum compound, and the olefin to a pre-polymerization tank in the pre-polymerization include the following methods (1) and (2):

a method (1) in which the solid catalyst component for olefin polymerization and the organic aluminum compound are supplied to a pre-polymerization tank and then the olefin is supplied to the pre-polymerization tank; and
a method (2) in which the solid catalyst component for olefin polymerization and the olefin are supplied to a pre-polymerization tank and then the organic aluminum compound is supplied to the pre-polymerization tank.

Examples of a method for supplying the olefin to a pre-polymerization tank in the pre-polymerization include the following methods (1) and (2):

a method (1) in which the olefin is sequentially supplied to a pre-polymerization tank so that the pressure in the pre-polymerization tank is maintained at a predetermined level; and
a method (2) in which a predetermined total amount of the olefin is supplied to a pre-polymerization tank at a time.

The amount of the external electron donor used in the pre-polymerization is preferably 0.01 mol to 400 mol, more preferably 0.02 mol to 200 mol, particularly preferably 0.03 mol to 100 mol per mole of titanium atoms contained in the solid catalyst component for olefin polymerization. The amount of the external electron donor used in the pre-polymerization is preferably 0.003 mol to 5 mol, more preferably 0.005 mol to 3 mol, particularly preferably 0.01 mol to 2 mol per mole of the organic aluminum compound.

Examples of a method for supplying the external electron donor to a pre-polymerization tank in the pre-polymerization include the following methods (1) and (2):

a method (1) in which the external electron donor is supplied alone to a pre-polymerization tank; and
a method (2) in which a mixture obtained by bringing the external electron donor and the organic aluminum compound into contact with each other is supplied to a pre-polymerization tank.

When the step (i) and the step (ii) are performed, the amount of the organic aluminum compound used in the main polymerization is preferably 1 mol to 1000 mol, particularly preferably 5 mol to 600 mol per mole of titanium atoms in the solid catalyst component for olefin polymerization.

When the external electron donor is used in the main polymerization, the amount of the external electron donor used is preferably 0.1 mol to 2000 mol, more preferably 0.3 mol to 1000 mol, particularly preferably 0.5 mol to 800 mol per mole of titanium atoms contained in the solid catalyst component for olefin polymerization. Further, when the external electron donor is used in the main polymerization, the amount of the external electron donor used is preferably 0.001 mol to 5 mol, more preferably 0.005 mol to 3 mol, particularly preferably 0.01 mol to 1 mol per mole of the organic aluminum compound.

The temperature of the main polymerization is preferably - 30°C to 300°C, more preferably 20°C to 180°C. The polymerization pressure is not particularly limited, but is preferably ordinary pressure to 10 MPa, more preferably about 200 kPa to 5 MPa from an industrial and economical point of view. The polymerization is batch polymerization or continuous polymerization, and examples of a polymerization method include slurry polymerization or solution polymerization using, as a solvent, an inert hydrocarbon such as propane, butane, isobutane, pentane, hexane, heptane, or octane, bulk polymerization using, as a medium, an olefin that is in a liquid state at the polymerization temperature, and vapor-phase polymerization.

In order to adjust the molecular weight of a polymer obtained in the main polymerization, a chain-transfer agent (e.g., hydrogen or an alkylzinc such as dimethylzinc or diethylzinc) may be used.

When a catalyst for olefin polymerization is formed using the solid catalyst component for olefin polymerization according to this embodiment and an olefin is polymerized using the catalyst for olefin polymerization, it is possible to obtain a polymer having high stereoregularity (specifically, isostatic stereoregularity).

As a measure of isostatic stereoregularity, a xylene-soluble component content can be used. The xylene-soluble component content of an olefin polymer obtained by olefin polymerization using the catalyst for olefin polymerization according to this embodiment is preferably 2.0 mass% or less, more preferably 1.5 mass% or less, even more preferably 1.0 mass% or less. The xylene-soluble component content can be determined by, for example, a method described later in Examples.

When a particulate olefin polymer is produced by vapor-phase polymerization using the solid catalyst component for olefin polymerization (specifically, the catalyst for olefin polymerization) according to this embodiment, it is possible to obtain polymer particles containing a little amount of fine powder. The amount of fine powder (1 mm or less) in the olefin polymer is preferably 4.0 mass% or less, more preferably 3.0 mass% or less.

<Second Embodiment>

Hereinbelow, a second embodiment (an embodiment according to the second aspect of the present invention) will be described. The second embodiment is different from the first embodiment in the following points, but other structures are common. Therefore, the common structures will not be described repeatedly.

A method for producing a solid catalyst component for olefin polymerization according to the second embodiment includes the step of reacting a magnesium compound and a titanium halide compound with each other so that a total heat release value per mole of the titanium compound is 6 kJ to 90 kJ, preferably 20 kJ to 90 kJ, more preferably 30 kJ to 90 kJ. This makes it possible to prevent a reduction in polymerization activity caused by application of heat to a resulting solid catalyst component for olefin polymerization. It is to be noted that the total heat release value is based on reaction heat between the magnesium compound and the titanium halide compound at the time when a step (XI) that will be described later is performed. The total heat release value can be determined as a product of a heat release rate and a heat release time. More specifically, the total heat release value can be determined by a method described later in [Examples]. Further, the total heat release value can be adjusted by the efficiency of conversion of the magnesium compound to a magnesium halide, and specifically, the conversion efficiency can be increased by performing at least one of the following (a) to (c) in the step (XI) that will be described later:

(a) increasing the reaction temperature;
(b) increasing the supply rate of the titanium halide compound; and
(c) increasing the concentration of the titanium halide compound and/or the concentration of the magnesium compound in a solvent.

Further, similarly to the step (I) in the first embodiment, the method for producing a solid catalyst component for olefin polymerization according to the second embodiment preferably includes a step (XI) in which a titanium halide compound is supplied to a magnesium compound mixture containing a magnesium compound and a solvent to obtain a slurry containing a solid product. Similarly to the step (I) in the first embodiment, the step (XI) includes a step (first supply step) in which the supply rate of the titanium halide compound to the magnesium compound is maintained at a predetermined level until a predetermined amount of the titanium halide compound is supplied to the magnesium compound. In the second embodiment, the supply rate of the titanium halide compound per mole of the magnesium compound in the first supply step is maintained at preferably 0.005 mol/min to 3.8 mol/min, more preferably 0.008 mol/min to 3.8 mol/min until at least 0.5 mol of the titanium halide compound is supplied per mole of the magnesium compound.

Further, similarly to the step (I) in the first embodiment, the step (XI) in the second embodiment may include a step (second supply step) in which the supply rate of the titanium halide compound to the magnesium compound is maintained at a predetermined level after a predetermined amount of the titanium halide compound is supplied to the magnesium compound (after the first supply step). In the second embodiment, the supply rate of the titanium halide compound per mole of the magnesium compound in the second supply step is maintained at preferably 1.0 mol/min to 5.0 mol/min, more preferably 1.0 mol/min to 4.8 mol/min, even more preferably 2.0 mol/min to 4.0 mol/min after at least 0.5 mol of the titanium halide compound is supplied per mole of the magnesium compound (i.e., after the first supply step). This makes it possible to quickly supply the titanium halide compound because the supply rate of the titanium halide compound increases after at least 0.5 mol of the titanium halide compound is supplied per mole of the magnesium compound.

Further, similarly to the step (II) in the first embodiment, the method for producing a solid catalyst component for olefin polymerization according to the second embodiment preferably includes a step (XII) in which an internal electron donor is supplied to the slurry containing a solid product obtained in the step (XI) from the viewpoint of improving particle properties of a resulting solid catalyst component for olefin polymerization.

Examples of the magnesium compound, the titanium halide compound, and the internal electron donor that can be used in the method for producing a solid catalyst component for olefin polymerization according to the second embodiment include the same ones as used in the first embodiment. The magnesium compound used in the second embodiment is preferably a compound obtained by reacting a magnesium dialkoxide and a silicon halide compound with each other. Examples of the silicon halide include compounds represented by $R_nSiX_{4-n}$ (wherein R is hydrogen, an alkyl group, a haloalkyl group, an alkoxy group, or an aryl group, n is an integer of 0 to 4, and X is a chlorine atom, a bromine atom, or an iodine atom). The titanium halide compound used in the second embodiment is preferably a titanium tetrahalide. Examples of the titanium tetrahalide include tetrachlorotitanium, tetraiodotitanium, and tetrabromotitanium. The internal electron donor used in the second embodiment is preferably tetrahydrofuran.

It is to be noted that in the method for producing a solid catalyst component for olefin polymerization according to the second embodiment, the maximum heat release rate per mole of the magnesium compound in the step of reacting a magnesium compound and a titanium halide compound with each other is not particularly limited and, for example, may be 18 W or less as in the case of the first embodiment or may exceed 18 W.

Similarly to the first embodiment, a catalyst for olefin polymerization can be produced by mixing a solid catalyst component for olefin polymerization produced by the above-described production method with an organic aluminum compound (preferably an organic aluminum compound and an external electron donor). That is, similarly to the first embodiment, a method for producing a catalyst for olefin polymerization according to the second embodiment includes a mixing step in which a solid catalyst component for olefin polymerization and an organic aluminum compound (preferably an organic aluminum compound and an external electron donor) are mixed. Examples of the organic aluminum compound and the external electron donor that can be used in the method for producing a catalyst for olefin polymerization according to the second embodiment include the same ones as used in the first embodiment.

Further, similarly to the first embodiment, an olefin polymer can be obtained by polymerizing an olefin in the presence of a catalyst for olefin polymerization produced by the above-described production method. That is, a method for producing an olefin polymer according to the second embodiment is intended to polymerize an olefin in the presence of the above-described catalyst for olefin polymerization. Examples of the olefin used in the method for producing an olefin polymer according to the second embodiment include the same ones as described with reference to the first embodiment.

Examples

Hereinbelow, the first aspect of the present invention will more specifically be described with reference to examples and a comparative example. The first aspect of the present invention is not limited to the following examples.

[Heat release rate calculation]

The heat release rate (Q[W]) during the reaction between a magnesium compound and a titanium halide compound was calculated from the difference in the temperature of a cooling medium between at the inlet and at the outlet of jacket of a reaction container ($\Delta T[°C]$), the flow rate of the cooling medium ($F[m^3/s]$), and the specific heat of the cooling medium ($Cp[J/m^{3.}°C)$ by the following formula (2). The maximum average heat release rate of every 10 minutes was regarded as the maximum heat release rate. It is to be noted that the jacket of the reaction container is configured to hold the reaction container and to allow a cooling medium to flow through a space between the reaction container and the jacket, and has an inlet to introduce the cooling medium into the space between the reaction container and the jacket and an outlet to discharge the cooling medium from the space between the reaction container and the jacket.

$$Q = Cp \times F \times \Delta T \ldots (2)$$

[Composition analysis of solid catalyst component for olefin polymerization]

(1) Titanium atom content

About 20 mg of a solid catalyst component for olefin polymerization was decomposed in about 30 mL of 2N dilute sulfuric acid. Then, an excess of 3 mL of a 3 mass% hydrogen peroxide solution was added thereto. Then, the characteristic absorption at 410 nm of the obtained liquid sample was measured by a visible-ultraviolet spectrophotometer V-650 manufactured by JASCO Corporation in accordance with the standard JIS K0115:2004, and a titanium atom content was determined on the basis of a calibration curve previously separately prepared.

(2) Alkoxy group content

About 2 g of a solid catalyst component for olefin polymerization was decomposed in 100 mL of water. Then. the amount of an alcohol corresponding to an alkoxy group in the obtained liquid sample was determined using a gas chromatography internal reference method in accordance with the standard JIS K0114:2012, and the obtained result was converted to an alkoxy group content.

(3) Internal electron donor content

About 300 mg of a solid catalyst component for olefin polymerization was dissolved in 100 mL of N,N-dimethylacetamide. Then, the internal electron donor content in the solution was determined by a gas chromatography internal reference method in accordance with the standard JIS K0114:2012.

(4) Median particle diameter (D50) of solid catalyst component for olefin polymerization and cumulative percentage of component having particle diameter of 10 μm or less

The median particle diameter (D50) of a solid catalyst component for olefin polymerization and the cumulative percentage of a component having a particle diameter of 10 μm or less were analyzed by laser diffraction/scattering in accordance with the standard ISO 13320:2009. As a measuring instrument, a laser diffraction particle diameter distribution meter ("Master Sizer 3000" manufactured by Malvern) was used, and the refractive index of toluene was 1.49 and the refractive index of the solid catalyst component for olefin polymerization was 1.53-0.1i. A toluene solvent from which moisture had previously been removed with alumina or the like was charged into a dispersing apparatus (Hydro MV) whose aperture was sealed with nitrogen so that the inside of a circulation system including a measurement cell was filled with the solvent. The stirring speed was set to 2,000 rpm, and a powder sample was charged while the solvent in the measurement cell was circulated without ultrasonic dispersion treatment so that a scattering intensity was 3 to 10% to measure a particle diameter. From the obtained volume-based particle diameter distribution diagram (chart), the median particle diameter (D50) and the cumulative percentage of a component having a particle diameter of 10 μm or less were determined. The sample was handled so as not to come into contact with the atmosphere and moisture and was not subjected to pretreatment.

[Analysis of polymer]

(1) Polymerization activity

The mass of a polymer obtained per unit mass of a solid catalyst component for olefin polymerization used in a polymerization reaction was regarded as polymerization activity (unit: g-polymer/g-solid catalyst component).

(2) Xylene-soluble component content (CXS: unit = mass%)

The xylene-soluble component content (hereinafter abbreviated as CXS) at 20°C of an olefin polymer was measured in the following manner.

One gram of a polymer was dissolved in 200 mL of boiling xylene, and then a resulting solution was slowly cooled to 50°C and then cooled to 20°C while being stirred in ice water and was then allowed to stand at 20°C for 3 hours. The precipitated polymer was separated by filtration, and the mass percentage of the polymer remaining in a filtrate was defined as CXS.

(3) Intrinsic viscosity ([η]: unit = dL/g)

The intrinsic viscosity (hereinafter abbreviated as [η]) of an olefin polymer was measured in the following manner.
The reduced viscosities of three samples having concentrations of 0.1 g/dL, 0.2 g/dL, and 0.5 g/dL were measured using an Ubbelohde type viscometer. The intrinsic viscosity was determined was determined by a calculation method described in Section 491 in a reference document "Polymer Solutions, Polymer Experimentology 11" (published by KYORITSU SHUPPAN CO., LTD. in 1982). That is, the intrinsic viscosity was determined by an extrapolation method in which reduced viscosities were plotted against concentrations and the concentration is extrapolated to zero. The measurement was performed at a temperature of 135°C using tetralin as a solvent.

[Example 1]

(1) Synthesis of solid catalyst component for olefin polymerization

Gas in a reaction container equipped with a stirrer was purged with nitrogen gas. Then, toluene (52.8 L) and magnesium diethoxide (11 kg) were added to the reaction container and stirred to obtain a suspension liquid. Then, the temperature in the reaction container was adjusted to 0°C or lower, and titanium tetrachloride (11.55 L) was charged into the reaction container for 7 hours with stirring (first supply step). The supply rate (initial supply rate) of titanium tetrachloride, the supply amount (initial supply amount) of titanium tetrachloride, and maximum heat release rate in the first supply step are shown below in Table 1. Then, titanium tetrachloride (21.45 L) was charged for 3 hours (second supply step). The supply rate of titanium tetrachloride in the second supply step was 0.012 mol/min per mole of magnesium diethoxide. Then, the temperature in the reaction container was adjusted to and maintained at 2°C or lower for 120 minutes.
Then, ethyl 2-ethoxymethyl-3,3-dimethylbutanoate (0.77 kg) was added to the reaction container in a state where the temperature in the container was maintained at 2°C or lower. Then, the temperature in the reaction container was adjusted to and maintained at 10°C or lower for 120 minutes. Then, toluene (14.3 L) was added to the reaction container, the temperature in the reaction container was adjusted to 60°C, and ethyl 2-ethoxymethyl-3,3-dimethylbutanoate (4.0 kg) was added. Then, the temperature in the reaction container was adjusted to 110°C, and stirring was performed for 3 hours. The thus obtained reaction mixture was subjected to solid-liquid separation at 110°C, and the solid was then washed with 83 L of toluene at 95°C three times. Then, toluene (34 L) was added to the reaction container, the temperature in the reaction container was adjusted to 60°C, and titanium tetrachloride (22 L) and ethyl 2-ethoxymethyl-3,3-dimethylbutanoate (0.95 kg) were added. Then, the temperature in the reaction container was adjusted to 110°C, and stirring was performed for 30 minutes. The thus obtained reaction mixture was subjected to solid-liquid separation at 110°C, and then the solid was washed with 83 L of toluene at 60°C three times and then with hexane (83 L) three times and then dried to obtain a solid catalyst component for olefin polymerization (11.0 kg). The solid catalyst component for olefin polymerization had a titanium atom content of 2.46 mass%, an ethoxy group content of 0.66 mass%, and an internal electron donor content of 12.11 mass%. Further, the median particle diameter of the solid catalyst component for olefin polymerization as measured by laser diffraction/scattering was 55.5 μm, and the cumulative percentage of a component having a particle diameter of 10 μm or less was 3.0%. The analysis results of the solid catalyst component for olefin polymerization are shown below in Table 1.

(2) Polymerization of propylene

An autoclave having an internal capacity of 3 L and equipped with a stirrer was sufficiently dried, and then air in the autoclave was evacuated. Then, 2.63 mmol of triethylaluminum (organic aluminum compound), 0.26 mmol of cyclohexylethyldimethoxysilane (external electron donor), and 5.55 mg of the solid catalyst component for olefin polymerization synthesized in Example 1(1) were added to the autoclave. Then, 780 g of propylene and 0.2 MPa of hydrogen were added to the autoclave. The temperature of the autoclave was increased to 80°C, and propylene was polymerized at 80°C for 1 hour. After the completion of the polymerization reaction, the unreacted monomer was purged to obtain a propylene polymer. The amount of a polymer generated per unit amount of the catalyst (polymerization activity) was 50,600 g-polymer/g-solid catalyst component. This polymer had a CXS of 0.58 wt% and a [η] of 1.29 dL/g. The analysis results of the obtained polymer are shown below in Table 2.

[Example 2]

(1) Synthesis of solid catalyst component for olefin polymerization

Gas in a reaction container equipped with a stirrer was purged with nitrogen gas. Then, toluene (52.8 L) and magnesium diethoxide (11 kg) were added to the reaction container and stirred to obtain a suspension liquid. Then, the temperature in the reaction container was adjusted to 0°C or lower, and titanium tetrachloride (11 L) was charged into the reaction container for 2 hours with stirring (first supply step). The supply rate (initial supply rate) of titanium tetrachloride, the supply amount (initial supply amount) of titanium tetrachloride, and maximum heat release rate in the first supply step are shown below in Table 1. Then, titanium tetrachloride (22 L) was charged for 8 hours (second supply step). The supply rate of titanium tetrachloride in the second supply step was 0.043 mol/min per mole of magnesium diethoxide. Then, the temperature in the reaction container was adjusted to and maintained at 2°C or lower for 120 minutes.

Then, ethyl 2-ethoxymethyl-3,3-dimethylbutanoate (0.77 kg) was added to the reaction container in a state where the temperature in the container was maintained at 2°C or lower. Then, the temperature in the reaction container was adjusted to and maintained at 10°C or lower for 120 minutes. Then, toluene (14.3 L) was added to the reaction container, the temperature in the reaction container was adjusted to 60°C, and ethyl 2-ethoxymethyl-3,3-dimethylbutanoate (4.0 kg) was added. Then, the temperature in the reaction container was adjusted to 110°C, and stirring was performed for 3 hours. The thus obtained reaction mixture was subjected to solid-liquid separation at 110°C, and the solid was then washed with 83 L of toluene at 95°C three times. Then, toluene (34 L) was added to the reaction container, the temperature in the reaction container was adjusted to 60°C, and titanium tetrachloride (22 L) and ethyl 2-ethoxymethyl-3,3-dimethylbutanoate (0.95 kg) were added. Then, the temperature in the reaction container was adjusted to 110°C, and stirring was performed for 30 minutes. The thus obtained reaction mixture was subjected to solid-liquid separation at 110°C, and then the solid was washed with 83 L of toluene at 60°C three times and then with hexane (83 L) three times and then dried to obtain a solid catalyst component for olefin polymerization (10.6 kg). The solid catalyst component for olefin polymerization had a titanium atom content of 2.41 mass%, an ethoxy group content of 0.64 mass%, and an internal electron donor content of 12.36 mass%. Further, the median particle diameter of the solid catalyst component for olefin polymerization as measured by laser diffraction/scattering was 54.7 $\mu$m, and the cumulative percentage of a component having a particle diameter of 10 $\mu$m or less was 4.0%. The analysis results of the solid catalyst component for olefin polymerization are shown below in Table 1.

(2) Polymerization of propylene

Polymerization of propylene was performed in the same manner as in Example 1 except that the solid catalyst component for olefin polymerization synthesized in Example 2(1) was used. The amount of a polymer generated per unit amount of the catalyst (polymerization activity) was 50,100 g-polymer/g-solid catalyst component. This polymer had a CXS of 0.63 wt% and a [$\eta$] of 1.23 dL/g. The analysis results of the obtained polymer are shown below in Table 2.

[Comparative Example 1]

(1) Synthesis of solid catalyst component for olefin polymerization

Gas in a reaction container equipped with a stirrer was purged with nitrogen gas. Then, toluene (33.4 L) and magnesium diethoxide (6.6 kg) were added to the reaction container and stirred to obtain a suspension liquid. Then, the temperature in the reaction container was adjusted to 0°C or lower, and titanium tetrachloride (19.8 L) was charged into the reaction container for 2 hours with stirring (comparative supply step). The supply rate (initial supply rate) of titanium tetrachloride, the supply amount (initial supply amount) of titanium tetrachloride, and maximum heat release rate in the comparative supply step are shown below in Table 1.

Then, the temperature in the reaction container was adjusted to and maintained at 2°C or lower for 120 minutes. Then, ethyl 2-ethoxymethyl-3,3-dimethylbutanoate (0.45 kg) was added to the reaction container in a state where the temperature in the container was maintained at 2°C or lower. Then, the temperature in the reaction container was adjusted to and maintained at 10°C or lower for 120 minutes. Then, toluene (7.0 L) was added to the reaction container, the temperature in the reaction container was adjusted to 60°C, and ethyl 2-ethoxymethyl-3,3-dimethylbutanoate (2.4 kg) was added. Then, the temperature in the reaction container was adjusted to 110°C, and stirring was performed for 3 hours. The thus obtained reaction mixture was subjected to solid-liquid separation at 110°C, and then the solid was washed with 50 L of toluene at 95°C three times. Then, toluene (30.3 L) was added to the reaction container, the temperature in the reaction container was adjusted to 60°C, and titanium tetrachloride (15 L) and ethyl 2-ethoxymethyl-3,3-dimethylbutanoate (0.56 kg) were added. Then, the temperature in the reaction container was adjusted to 110°C, and stirring was performed for 60 minutes. The thus obtained reaction mixture was subjected to solid-liquid separation at 110°C, and then the solid was washed with 50 L of toluene at 60°C three times and then with hexane (50 L) three times and then dried to obtain a solid catalyst component for olefin polymerization (5.9 kg). The solid catalyst component for olefin polymerization had a titanium atom content of 2.07 mass%, an ethoxy group content of 0.40 mass%, and an internal electron donor content of 12.60 mass%. Further, the median particle diameter of the solid catalyst component for olefin polymerization as measured by laser diffraction/scattering was 63.0 $\mu$m, and the cumulative percentage of a component having a particle diameter of 10 $\mu$m or less was 13.0%. The analysis results of the solid catalyst component for olefin polymerization are shown below in Table 1.

(2) Polymerization of propylene

Polymerization of propylene was performed in the same manner as in Example 1 except that the solid catalyst component for olefin polymerization synthesized in Comparative Example 1(1) was used. The amount of a polymer generated per unit amount of the catalyst (polymerization activity) was 59,400 g-polymer/g-solid catalyst component. This polymer had a CXS of 0.76 wt% and a [$\eta$] of 1.13 dL/g. The analysis results of the obtained polymer are shown below in Table 2.

[Table 1]

| | Titanium tetrachloride | | | Maximum heat release rate (W)*4 | Titanium atom content (mass%) | Alkoxy group content (mass%) | Internal electron donor content (mass%) | Median particle diameter (D50) (μm) | Cumulative percentage (%) of component with particle diameter of 10 μm or less |
|---|---|---|---|---|---|---|---|---|---|
| | Order of supply | Initial supply rate (mol/min) *2 | Initial supply amount (mol)*3 | | | | | | |
| Example 1 | *1 After supply of magnesium diethoxide | 0.0025 | 1.0 | 3.9 | 2.46 | 0.66 | 12.11 | 55.5 | 3.0 |
| Example 2 | *1 After supply of magnesium diethoxide | 0.0087 | 1.0 | 6.8 | 2.40 | 0.64 | 12.50 | 55.0 | 4.0 |
| Comparative Example 1 | *1 After supply of magnesium diethoxide | 0.026 | 3.1 | 19.7 | 2.07 | 0.40 | 12.60 | 63.0 | 13.0 |

*1: "After supply of magnesium diethoxide" means that titanium tetrachloride was supplied to a toluene suspension of magnesium diethoxide.
*2: per mole of magnesium diethoxide
*3: per mole of magnesium diethoxide
*4: per mole of magnesium diethoxide

[Table 2]

|  | Polymerization activity (g/g/HR) | $[\eta]$(dL/g) | CXS (mass%) |
|---|---|---|---|
| Example 1 | 50,600 | 1.29 | 0.58 |
| Example 2 | 50,100 | 1.23 | 0.63 |
| Comparative Example 1 | 59,400 | 1.13 | 0.76 |

<Summary>

As can be seen from Table 1, the "cumulative percentage of a component with a particle diameter of 10 $\mu$m or less" of each Example is smaller than that of Comparative Example 1. In other words, it is confirmed that the amount of relatively fine particles in the solid catalyst component for olefin polymerization synthesized in each Example is smaller than that synthesized in Comparative Example. That is, generation of relatively fine powder of a solid catalyst component for olefin polymerization can be prevented by adjusting the maximum heat release rate to a level within a predetermined range as in the case of the first aspect of the present invention.

Hereinbelow, the second aspect of the present invention will be described in more detail with reference to examples and comparative examples. The second aspect of the present invention is not limited to the following examples.

[Heat release rate calculation]

The heat release rate (Q[kW]) during the reaction between a magnesium compound and a titanium halide compound was calculated from the difference between the temperature in a reaction container and the temperature of a cooling medium in a jacket ($\Delta$T[°C]), a heat transfer area (S[m$^2$]), and an overall heat transfer coefficient (U[kJ/m$^2$·°C·s]) by the following formula (11). Further, the maximum heat release rate of every one second was regarded as the maximum heat release rate. It is to be noted that the heat transfer area means a contact area between a reactant and a reactor and was calculated from the volume of a reactant and the shape of a reactor. Further, the overall heat transfer coefficient U was calculated by the following formula (X) described in page 104 of "Applied Chemistry Series 4: Foundations of Chemical Engineering, 2006" and was found to be 0.05 kJ/m$^2$·°C·s.

$$Q = U \times S \times \Delta T \ \ldots (11)$$

$$1/U = 1/h1 + L/k + 1/h2 \ \ldots (X)$$

- h1: heat transfer coefficient of cooling medium [W/m$^2$/K]
- h2: heat transfer coefficient of reactant [W/m$^2$/K]
- L: thickness of jacket [m]
- k: heat transfer coefficient of jacket [W/m/K]

[Heat release time measurement]

The difference between the temperature in the reaction container and the temperature of the cooling medium in the jacket at the time when reaction was not performed was measured and regarded as a reference temperature difference. The time during which the temperature difference exceeded the reference temperature difference due to the supply of the titanium halide compound was regarded as heat release time (t[s]).

[Total heat release value calculation]

The total heat release value (Q') was calculated by the following formula (12). Q is the heat release rate described above.

$$Q' = Q \times t \ \ldots (12)$$

[Polymerization activity of catalyst for olefin polymerization]

The amount of an olefin polymer (ethylene-based polymer) generated per unit amount of a solid catalyst component for olefin polymerization was calculated as polymerization activity.

The heat stability of the solid catalyst component for olefin polymerization was evaluated on the basis of the rate of reduction in polymerization activity determined from polymerization activity calculated as the amount of an olefin polymer generated per unit amount of the solid catalyst component for olefin polymerization stored (heat-treated) in a thermostatic bath at 70°C for 24 hours and polymerization activity of the solid catalyst component for olefin polymerization not subjected to heat treatment.

[Bulk density of olefin polymer]

The bulk density of an olefin polymer was measured in accordance with JIS K-6721 (1966) using a bulk density measuring instrument (K6721 manufactured by TSUTSUI SCIENTIFIC INSTRUMENTS CO., LTD.).

[Example 11]

• Synthesis of solid catalyst component 11 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 40°C, and silicon tetrachloride (10 mL) was added to the reaction container for 5 seconds with stirring. Then, stirring was performed for 3 hours while the temperature in the reaction container was maintained at 40°C (first chlorination step, exothermic reaction). Toluene (100 mL) was added to the obtained reaction mixture maintained at 40°C, and the mixture was stirred for 5 minutes and then subjected to solid-liquid separation.

Toluene (129 mL) was added to the reaction container containing the obtained solid. Then, the temperature in the reaction container was adjusted to 45°C, titanium tetrachloride (25 mL) was added, and after the completion of the dropping, stirring was performed for 20 minutes while the temperature in the reaction container was maintained at 45°C (first titanium supply step, exothermic reaction). The supply rate of titanium tetrachloride, the supply amount of titanium tetrachloride, the temperature in the reactor during heat release, the maximum temperature difference ($\Delta T$ = temperature in reactor - temperature of cooling medium in jacket), the heat release time, and the total heat release value in the first titanium supply step are shown below in Table 3. Then, the temperature in the reaction container was adjusted to 110°C, and stirring was performed for 30 minutes. The obtained reaction mixture was subjected to solid-liquid separation at 110°C, and then the obtained solid was washed with toluene (129 mL) at 110°C four times.

Then, toluene (129 mL) was added to the reaction container, the temperature in the reaction container was adjusted to 50°C, and tetrahydrofuran (12 mL) was added. Then, the temperature of the jacket was adjusted to 50°C, and stirring was performed for 1 hour. The obtained reaction mixture was subjected to solid-liquid separation at 50°C, and then the obtained solid was washed with toluene (129 mL) at 50°C once and then with hexane (129 mL) twice and then vacuum-dried to obtain a solid catalyst component 11 for olefin polymerization (39 g).

• Synthesis of ethylene-butene copolymer 11

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 3 mmol of triisobutylaluminum (organic aluminum compound), and about 60 mg of the solid catalyst component 11 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer 11. Then, the amount of the polymer generated per unit amount of the solid catalyst component for olefin polymerization was calculated as polymerization activity. The results are shown below in Table 4.

[Example 12]

• Synthesis of solid catalyst component 12 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 40°C, and silicon tetrachloride (10 mL) was added to the reaction container for 5 seconds with stirring. Then, stirring was performed for 3 hours while the temperature in the reaction container was maintained at 40°C (first chlorination step, exothermic reaction). Toluene (100 mL) was added to the obtained reaction mixture maintained at 40°C, and the mixture was stirred for 5 minutes and then subjected to solid-liquid separation.

Toluene (129 mL) was added to the reaction container containing the obtained solid. Then, the temperature in the reaction container was adjusted to 45°C, titanium tetrachloride (10 mL) was added, and after the completion of the dropping, stirring was performed for 20 minutes while the temperature in the reaction container was maintained at 45°C (first titanium supply step, exothermic reaction). The supply rate of titanium tetrachloride, the supply amount of titanium tetrachloride, the temperature in the reactor during heat release, the maximum temperature difference ($\Delta T$ = temperature in reactor - temperature of cooling medium in jacket), the heat release time, and the total heat release value in the first titanium supply step are shown below in Table 3. Then, the temperature in the reaction container was adjusted to 110°C, and stirring was performed for 30 minutes. The obtained reaction mixture was subjected to solid-liquid separation at 110°C, and then the obtained solid was washed with toluene (129 mL) at 110°C once.

Then, toluene (129 mL) was added to the reaction container, the temperature in the reaction container was adjusted to 40°C, and titanium tetrachloride (15 mL, 90 mL/min) was added (second titanium supply step, without heat release (i.e., $\Delta T$=0)). Then, the temperature in the reaction container was adjusted to 110°C, and stirring was performed for 60 minutes. The obtained reaction mixture was subjected to solid-liquid separation at 110°C, and then the obtained solid was washed with toluene (129 mL) at 110°C four times.

Then, toluene (129 mL) was added to the reaction container, the temperature in the reaction container was adjusted to 50°C, and tetrahydrofuran (12 mL) was added. Then, the temperature of the jacket was adjusted to 50°C, and stirring was performed for 1 hour. The obtained reaction mixture was subjected to solid-liquid separation at 50°C, and then the obtained solid was washed with toluene (129 mL) at 50°C once and then with hexane (129 mL) twice and then vacuum-dried to obtain a solid catalyst component 12 for olefin polymerization (39 g).

• Synthesis of ethylene-butene copolymer 12

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, and 0.6 MPa of ethylene, 1 mmol of triisobutylaluminum (organic aluminum compound), and about 20 mg of the solid catalyst component 12 for olefin polymerization were added to the autoclave. Then, ethylene was supplied so that the pressure in the system was constant, and then ethylene and butene were copolymerized at 70°C for 2 hours. After the completion of the polymerization reaction, the unreacted monomers were purged to obtain an ethylene-butene copolymer 12. Then, the amount of the polymer generated per unit amount of the solid catalyst component for olefin polymerization was calculated as polymerization activity. The results are shown below in Table 4.

[Example 13]

• Synthesis of solid catalyst component 13 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 40°C, and silicon tetrachloride (10 mL) was added to the reaction container for 5 seconds with stirring. Then, stirring was performed for 3 hours while the temperature in the reaction container was maintained at 40°C (first chlorination step, exothermic reaction). Then, the temperature in the reaction container was adjusted to 105°C, and stirring was performed for 30 minutes.

Then, the temperature in the reaction container was adjusted to 20°C, titanium tetrachloride (5 mL) was added, and stirring was performed for 60 minutes while the temperature in the reaction container was maintained at 20°C (first titanium supply step, exothermic reaction). The supply rate of titanium tetrachloride, the supply amount of titanium tetrachloride, the temperature in the reactor during heat release, the maximum temperature difference ($\Delta T$ = temperature in reactor - temperature of cooling medium in jacket), the heat release time, and the total heat release value in the first titanium supply step are shown below in Table 3. Then, the temperature in the reaction container was adjusted to 105°C, and stirring was performed for 30 minutes. The obtained reaction mixture was subjected to solid-liquid separation at 105°C, and then the obtained solid was washed with toluene (129 mL) at 105°C once.

Then, toluene (129 mL) was added to the reaction container, the temperature in the reaction container was adjusted to 40°C, and titanium tetrachloride (15 mL, 90 mL/min) was added (second titanium supply step, without heat

release (i.e., ∆T=0)). Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C three times.

Then, toluene (129 mL) was added to the reaction container, the temperature in the reaction container was adjusted to 50°C, and tetrahydrofuran (9 mL) was added. Then, the temperature of the jacket was adjusted to 50°C and stirring was performed for 30 minutes, and then the temperature of the jacket was adjusted to 70°C and stirring was performed for 30 minutes. The obtained reaction mixture was subjected to solid-liquid separation at 70°C, and then the obtained solid was washed with toluene (129 mL) at 70°C twice and then with hexane (129 mL) twice and then vacuum-dried to obtain a solid catalyst component 13 for olefin polymerization (38 g).

• Synthesis of ethylene-butene copolymer 13

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 1 mmol of triisobutylaluminum (organic aluminum compound), and about 20 mg of the solid catalyst component 13 for olefin polymerization were added to the autoclave. Then, ethylene was supplied so that the pressure in the system was constant, and then ethylene and butene were copolymerized at 70°C for 2 hours. After the completion of the polymerization reaction, the unreacted monomers were purged to obtain an ethylene-butene copolymer 13. Then, the amount of the polymer generated per unit amount of the solid catalyst component for olefin polymerization was calculated as polymerization activity. The results are shown below in Table 4.

[Example 14]

• Synthesis of solid catalyst component 14 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 40°C, and silicon tetrachloride (10 mL) was added to the reaction container for 5 seconds with stirring. Then, stirring was performed for 3 hours while the temperature in the reaction container was maintained at 40°C (first chlorination step, exothermic reaction).

Then, the temperature in the reaction container was maintained at 40°C, titanium tetrachloride (10 mL) was added, and stirring was performed for 10 minutes (first titanium supply step, exothermic reaction). The supply rate of titanium tetrachloride, the supply amount of titanium tetrachloride, the temperature in the reactor during heat release, the maximum temperature difference (∆T = temperature in reactor - temperature of cooling medium in jacket), the heat release time, and the total heat release value in the first titanium supply step are shown below in Table 3. Then, the temperature in the reaction container was adjusted to 105°C, and stirring was performed for 60 minutes. The obtained reaction mixture was subjected to solid-liquid separation at 105°C, and the obtained solid was washed with toluene (129 mL) at 105°C once.

Then, toluene (129 mL) was added to the reaction container, the temperature in the reaction container was adjusted to 40°C, and titanium tetrachloride (10 mL, 60 mL/min) was added (second titanium supply step, without heat release (i.e., ∆T=0)). Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C three times.

Then, toluene (129 mL) was added to the reaction container, the temperature in the reaction container was adjusted to 50°C, and tetrahydrofuran (6 mL) was added. Then, the temperature of the jacket was adjusted to 50°C and stirring was performed for 30 minutes, and then the temperature of the jacket was adjusted to 70°C and stirring was performed for 30 minutes. The obtained reaction mixture was subjected to solid-liquid separation at 70°C, and then the obtained solid was washed with toluene (129 mL) at 70°C twice and then with hexane (129 mL) twice and then vacuum-dried to obtain a solid catalyst component 14 for olefin polymerization (36 g).

• Synthesis of ethylene-butene copolymer 14

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 1 mmol of triisobutylaluminum (organic aluminum compound), and about 20 mg of the solid catalyst component 14 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer 14. Then, the amount of the polymer generated per unit amount of the solid catalyst component for olefin polymerization was calculated as polymerization activity. The results are shown below in Table 4.

[Comparative Example 11]

• Synthesis of solid catalyst component C11 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 30°C, and silicon tetrachloride (14 mL) was added to the reaction container for 5 seconds with stirring. Then, stirring was performed for 2 hours while the temperature in the reaction container was maintained at 30°C (first chlorination step, exothermic reaction). Then, the temperature in the reaction container was adjusted to 105°C, and stirring was performed for 60 minutes. A supernatant was removed while the obtained reaction mixture was maintained at 105°C, and then the obtained solid was washed with toluene (216 mL) at 105°C once (removal of supernatant by washing).

Then, the temperature in the reaction container was maintained at 35°C, and titanium tetrachloride (15 mL) was added (first titanium supply step, exothermic reaction). The supply rate of titanium tetrachloride, the supply amount of titanium tetrachloride, the temperature in the reactor during heat release, the maximum temperature difference ($\Delta T$ = temperature in reactor - temperature of cooling medium in jacket), the heat release time, and the total heat release value in the first titanium supply step are shown below in Table 3. Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C four times and then with hexane (129 mL) at 30°C twice.

Then, hexane (129 mL) was added to the reaction container, the temperature in the reaction container was adjusted to 30°C, and tetrahydrofuran (12 mL) was added. Then, the temperature in the reaction container was adjusted to 30°C, and stirring was performed for 30 minutes. The obtained reaction mixture was subjected to solid-liquid separation at 30°C, and then the obtained solid was washed with hexane (129 mL) twice and then vacuum-dried to obtain a solid catalyst component C11 for olefin polymerization (40 g).

• Synthesis of ethylene-butene copolymer C11

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature in the autoclave was increased to 70°C, 0.6 MPa of ethylene, 1 mmol of triisobutylaluminum (organic aluminum compound), and about 20 mg of the solid catalyst component C11 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer C11. Then, the amount of the polymer generated per unit amount of the solid catalyst component for olefin polymerization was calculated as polymerization activity. The results are shown below in Table 4.

[Comparative Example 12]

• Synthesis of solid catalyst component C12 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 30°C, and silicon tetrachloride (14 mL) was added to the reaction container for 5 seconds with stirring. Then, the temperature in the reaction container was adjusted to 30°C, and stirring was performed for 3 hours (first chlorination step, exothermic reaction). Then, the temperature in the reaction container was adjusted to 105°C, and stirring was performed for 60 minutes. Toluene (216 mL) was added to the obtained reaction mixture maintained at 105°C, the mixture was stirred, and a supernatant was removed. Then, the obtained solid was washed with toluene (126 mL) at 105°C once (removal of supernatant by washing).

Then, the temperature in the reaction container was adjusted to 35°C, and titanium tetrachloride (20 mL) was added (first titanium supply step, exothermic reaction). The supply rate of titanium tetrachloride, the supply amount of titanium tetrachloride, the temperature in the reactor during heat release, the maximum temperature difference ($\Delta T$ =

temperature in reactor - temperature of cooling medium in jacket), the heat release time, and the total heat release value in the first titanium supply step are shown below in Table 3. Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C four times and then with hexane (129 mL) at 30°C twice.

Then, hexane (129 mL) was added to the reaction container, the temperature in the reaction container was adjusted to 30°C, and tetrahydrofuran (12 mL) was added. Then, the temperature in the reaction container was adjusted to 30°C, and stirring was performed for 30 minutes. The obtained reaction mixture was subjected to solid-liquid separation at 30°C, and then the obtained solid was washed with hexane (129 mL) twice and then vacuum-dried to obtain a solid catalyst component C12 for olefin polymerization (41 g).

• Synthesis of ethylene-butene copolymer C12

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 1 mmol of triisobutylaluminum (organic aluminum compound), and about 20 mg of the solid catalyst component C12 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer C12. Then, the amount of the polymer generated per unit amount of the solid catalyst component for olefin polymerization was calculated as polymerization activity. The results are shown below in Table 4.

[Comparative Example 13]

• Synthesis of solid catalyst component C13 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 40°C, and silicon tetrachloride (10 mL) was added to the reaction container for 5 seconds with stirring. Then, the temperature in the reaction container was adjusted to 40°C, and stirring was performed for 3 hours (first chlorination step, exothermic reaction). Then, the temperature in the reaction container was adjusted to 105°C, and stirring was performed for 60 minutes. Toluene (216 mL) was added to the obtained reaction mixture maintained at 105°C, the mixture was stirred, and a supernatant was removed. Then, the obtained solid was washed with toluene (126 mL) at 105°C once (removal of supernatant by washing).

Then, the temperature in the reaction container was maintained at 35°C, and titanium tetrachloride (15 mL) was added (first titanium supply step, exothermic reaction). The supply rate of titanium tetrachloride, the supply amount of titanium tetrachloride, the temperature in the reactor during heat release, the maximum temperature difference (ΔT = temperature in reactor - temperature of cooling medium in jacket), the heat release time, and the total heat release value in the first titanium supply step are shown below in Table 3. Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C four times and then with hexane (129 mL) at 30°C twice.

Then, hexane (129 mL) was added to the reaction container, the temperature in the reaction container was adjusted to 30°C, and tetrahydrofuran (6 mL) was added. Then, the temperature in the reaction container was adjusted to 30°C, and stirring was performed for 30 minutes. The obtained reaction mixture was subjected to solid-liquid separation at 30°C, and then the obtained solid was washed with hexane (129 mL) twice and then vacuum-dried to obtain a solid catalyst component C13 for olefin polymerization (36 g).

• Synthesis of ethylene-butene copolymer C13

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 1 mmol of triisobutylaluminum (organic aluminum compound), and about 20 mg of the solid catalyst component C13 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer C13. Then, the amount of the polymer generated per unit amount of the solid catalyst component for olefin polymerization was calculated as polymerization activity. The results are shown below in Table 4.

[Comparative Example 14]

• Synthesis of solid catalyst component C14 for olefin polymerization

Gas in a reaction container equipped with a stirrer was purged with nitrogen gas. Then, toluene (120 mL) and magnesium diethoxide (33 g) were added to the reaction container and stirred to obtain a suspension liquid. Then, the temperature in the reaction container was adjusted to 30°C, and silicon tetrachloride (14 mL) was added to the reaction container for 5 seconds with stirring. Then, the temperature in the reaction container was adjusted to 30°C, and stirring was performed for 3 hours (first chlorination step, exothermic reaction). Then, the temperature in the reaction container was adjusted to 105°C, and stirring was performed for 60 minutes. Toluene (216 mL) was added to the obtained reaction mixture maintained at 105°C, the mixture was stirred, and a supernatant was removed. Then, the obtained solid was washed with toluene (126 mL) at 105°C once (removal of supernatant by washing).

Then, the temperature in the reaction container was adjusted to 35°C, and titanium tetrachloride (20 mL) was added (first titanium supply step, exothermic reaction). The supply rate of titanium tetrachloride, the supply amount of titanium tetrachloride, the temperature in the reactor during heat release, the maximum temperature difference ($\Delta T$ = temperature in reactor - temperature of cooling medium in jacket), the heat release time, and the total heat release value in the first titanium supply step are shown below in Table 3. Then, the temperature in the reaction container was adjusted to 110°C, and stirring was performed for 120 minutes. The obtained reaction mixture was subjected to solid-liquid separation at 110°C, and then the obtained solid was washed with toluene (129 mL) at 110°C four times and then with hexane (129 mL) at 30°C twice.

Then, toluene (129 mL) was added to the reaction container, the temperature in the reaction container was adjusted to 40°C, and titanium tetrachloride (15 mL, 3 mL/min) was added (second titanium supply step, without heat release (i.e., $\Delta T$=0)). Then, the temperature in the reaction container was adjusted to 110°C, and stirring was performed for 60 minutes. The obtained reaction mixture was subjected to solid-liquid separation at 110°C, and then the obtained solid was washed with toluene (129 mL) at 110°C four times.

Then, toluene (129 mL) was added to the reaction container, the temperature in the reaction container was adjusted to 30°C, and tetrahydrofuran (12mL) was added. Then, the temperature in the reaction container was adjusted to 30°C, and stirring was performed for 30 minutes. The obtained reaction mixture was subjected to solid-liquid separation at 30°C, and then the obtained solid was washed with toluene (129 mL) once and then with hexane (129 mL) twice and then vacuum-dried to obtain a solid catalyst component C14 for olefin polymerization (41 g).

• Synthesis of ethylene-butene copolymer C14

An autoclave having an internal capacity of 3 L and equipped with a stirrer was sufficiently dried, and then air in the autoclave was evacuated. Then, 0.12 MPa of hydrogen, 100 g of butene, and 652 g of butane were added to the autoclave. The temperature of the autoclave was increased to 70°C, 0.6 MPa of ethylene, 1 mmol of triisobutylaluminum (organic aluminum compound), and about 20 mg of the solid catalyst component C14 for olefin polymerization were added to the autoclave, ethylene was then supplied so that the pressure in the system was constant, and then ethylene and butene were copolymerized at 70°C for 2 hours. After the completion of the polymerization reaction, the unreacted monomers were purged to obtain an ethylene-butene copolymer C14. Then, the amount of the polymer generated per unit amount of the solid catalyst component for olefin polymerization was calculated as polymerization activity. The results are shown below in Table 4.

[Table 3]

| | Initial supply rate (mol/min) of titanium tetrachloride *1 | Initial supply amount of titanium tetrachloride (mol) *2 | Internal temperature (°C) | Maximum temperature difference ($\Delta T$)(°C) | Heat release time (min) | Total heat release value (kJ/mol-Ti) |
|---|---|---|---|---|---|---|
| Example 11 | 0.008 | 0.8 | 45~47.3 | 5.9 | 40 | 19.8 |
| Example 12 | 0.008 | 0.32 | 45~46.5 | 5.6 | 40 | 49.6 |
| Example 13 | 3.8 | 0.16 | 20~33.2 | 13.2 | 40 | 79.6 |

(continued)

| | Initial supply rate (mol/min) of titanium tetrachloride *1 | Initial supply amount of titanium tetrachloride (mol) *2 | Internal temperature (°C) | Maximum temperature difference (ΔT)(°C) | Heat release time (min) | Total heat release value (kJ/mol-Ti) |
|---|---|---|---|---|---|---|
| Example 14 | 3.8 | 0.32 | 40~72.1 | 32.1 | 16.2 | 78.5 |
| Comparative Example 11 | 1.14 | 0.48 | 34.5~39.7 | 4.7 | 2.3 | 0.9 |
| Comparative Example 12 | 3.8 | 0.64 | 34.2~38.8 | 3.8 | 2 | 0.4 |
| Comparative Example 13 | 3.8 | 0.48 | 34.5~46.9 | 11.9 | 4.1 | 5.7 |
| Comparative Example 14 | 3.8 | 0.64 | 34.2~38.8 | 3.8 | 2 | 0.4 |
| *1: per mole of magnesium diethoxide *2: per mole of magnesium diethoxide | | | | | | |

[Table 4]

| | Polymerization activity (g/g) | | Polymerization activity reduction rate (%) | Bulk density of olefin polymer (g/mL) | | Rate of reduction in bulk density due to heat treatment (%) |
|---|---|---|---|---|---|---|
| | With or without heat treatment of solid catalyst component for olefin polymerization | | | With or without heat treatment of solid catalyst component for olefin polymerization | | |
| | without heat treatment | with heat treatment | | without heat treatment | with heat treatment | |
| Example 11 | 1785 | 1452 | 17 | 0.381 | 0.380 | 0 |
| Example 12 | 1873 | 1697 | 10 | 0.343 | 0.340 | 1 |
| Example 13 | 1208 | 1081 | 10 | 0.334 | 0.340 | -2 |
| Example 14 | 2179 | 2000 | 8 | 0.373 | 0.375 | -1 |
| Comparative Example 11 | 2335 | 1244 | 47 | 0.268 | 0.280 | -4 |
| Comparative Example 12 | 4453 | 1103 | 75 | 0.243 | 0.280 | -15 |
| Comparative Example 13 | 2833 | 1538 | 46 | 0.396 | 0.375 | 5 |
| Comparative Example 14 | 4823 | 2325 | 52 | 0.250 | 0.222 | 11 |

<Summary>

As can be seen from Tables 3 and 4, the polymerization activity reduction rate of each Example having a high total heat release value is lower than that of each Comparative Example. That is, a reduction in polymerization activity caused by application of heat to the solid catalyst component for olefin polymerization can be prevented by providing the step of reacting a magnesium compound and a titanium halide compound with each other so that a total heat release value per mole of the titanium compound falls within a predetermined range as in the case of the second aspect of the present invention. Further, as can be seen from Tables 3 and 4, the olefin polymer of each Example has a bulk density of 0.300 g/mL or more and shows a low bulk density reduction rate. That is, even when heat is applied to the solid catalyst component for olefin polymerization, a reduction in the bulk density of a resulting olefin polymer can be prevented by providing the step of reacting a magnesium compound and a titanium halide compound with each other so that a total heat release value per mole of the titanium compound falls within a predetermined range as in the case of the second aspect of the present invention.

**Claims**

1. A method for producing a solid catalyst component for olefin polymerization by reacting a magnesium compound and a titanium halide compound with each other, the method comprising the step of reacting a magnesium compound and a titanium halide compound with each other so that a maximum heat release rate per mole of the magnesium compound is 18 W or less.

2. The method for producing a solid catalyst component for olefin polymerization according to claim 1, comprising a step (I) in which a titanium halide compound is supplied to a magnesium compound mixture containing a magnesium compound and a solvent to obtain a slurry containing a solid product, wherein
   the step (I) comprises the step of maintaining a supply rate of the titanium halide compound per mole of the magnesium compound at 0.01 mol/min or less until at least 1 mole of the titanium halide compound is supplied per mole of the magnesium compound.

3. The method for producing a solid catalyst component for olefin polymerization according to claim 2, wherein the step (I) further comprises the step of increasing the supply rate of the titanium halide compound per mole of the magnesium compound to more than 0.01 mol/min after at least 1 mole of the titanium halide compound is supplied per mole of the magnesium compound.

4. The method for producing a solid catalyst component for olefin polymerization according to claim 2 or 3, comprising a step (II) in which an internal electron donor is supplied to the slurry obtained in the step (I).

5. The method for producing a solid catalyst component for olefin polymerization according to any one of claims 1 to 4, wherein the magnesium compound is a magnesium dialkoxide.

6. The method for producing a solid catalyst component for olefin polymerization according to any one of claims 1 to 5, wherein the titanium halide compound is a titanium tetrahalide.

7. A method for producing a catalyst for olefin polymerization, comprising a mixing step in which a solid catalyst component for olefin polymerization obtained by the method for producing a solid catalyst component for olefin polymerization according to any one of claims 1 to 6 and an organic aluminum compound are mixed.

8. A method for producing an olefin polymer, comprising polymerizing an olefin in a presence of the catalyst for olefin polymerization according to claim 7.

9. A method for producing a solid catalyst component for olefin polymerization by reacting a magnesium compound and a titanium halide compound with each other, the method comprising the step of reacting a magnesium compound and a titanium halide compound with each other so that a total heat release value per mole of the titanium compound is 6 kJ to 90 kJ.

10. The method for producing a solid catalyst component for olefin polymerization according to claim 9, comprising a step (XI) in which a titanium halide compound is supplied to a magnesium compound mixture containing a magnesium compound and a solvent to obtain a slurry containing a solid product, wherein
    the step (XI) comprises the step of maintaining a supply rate of the titanium halide compound per mole of the magnesium compound at 0.005 mol/min to 3.8 mol/min until at least 0.5 moles of the titanium halide compound is supplied per mole of the magnesium compound.

11. The method for producing a solid catalyst component for olefin polymerization according to claim 10, wherein the step (XI) comprises the step of maintaining the supply rate of the titanium halide compound per mole of the magnesium compound at 1.0 mol/min to 5.0 mol/min after at least 0.5 moles of the titanium halide compound is supplied per mole of the magnesium compound.

12. The method for producing a solid catalyst component for olefin polymerization according to claim 10 or 11, comprising a step (XII) in which an internal electron donor is supplied to the slurry obtained in the step (XI).

13. The method for producing a solid catalyst component for olefin polymerization according to claim 12, wherein the internal electron donor is tetrahydrofuran.

14. The method for producing a solid catalyst component for olefin polymerization according to any one of claims 9 to 13, wherein the magnesium compound is a compound obtained by reacting a magnesium dialkoxide and a silicon halide compound with each other.

15. The method for producing a solid catalyst component for olefin polymerization according to any one of claims 9 to 14, wherein the titanium halide compound is a titanium tetrahalide.

16. A method for producing a catalyst for olefin polymerization, comprising a mixing step in which a solid catalyst component for olefin polymerization obtained by the method for producing a solid catalyst component for olefin polymerization according to any one of claims 9 to 15 and an organic aluminum compound are mixed.

17. A method for producing an olefin polymer, comprising polymerizing an olefin in a presence of the catalyst for olefin polymerization according to claim 16.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025862 A
- US 6825146 B
- WO 1998044009 A
- WO 2003000754 A
- WO 2003000757 A
- WO 2003085006 A
- JP 4368391 A
- JP 3074341 A

- JP 8073388 A
- WO 2013058193 A
- JP 2011246699 A
- JP 10212319 A
- JP 2950168 B
- JP 2006096936 A
- JP 2009173870 A
- JP 2010168545 A